# EUROPEAN PATENT SPECIFICATION

(11) **EP 0 452 156 B1**
(45) Date of publication and mention of the grant of the patent: **13.08.1997**
(21) Application number: 91303283.5
(22) Date of filing: 12.04.1991
(51) Int. Cl.: C08F 4/651, C08F 4/654, C08F 10/00

(54) **Solid titanium catalyst component for olefin polymerization, olefin polymerization catalyst, prepolymerized polyolefin-containing catalyst and method of olefin polymerization**
Festes Titan enthaltendes Katalysatorbestandteil und Katalysator für Olefinpolymerisation, vorpolymerisierte Olefinpolymerisationskatalysator und Verfahren für Olefinpolymerisation
Composant solide et catalyseur à base de titane pour polymérisation d'oléfines, catalyseur prépolymérisé et procédé de préparation de polyoléfines

(30) Priority: 13.04.1990 JP 97902/90; 13.04.1990 JP 97906/90; 13.04.1990 JP 97910/90; 13.04.1990 JP 97911/90
(43) Date of publication of application: 16.10.1991
(73) Proprietor: MITSUI PETROCHEMICAL INDUSTRIES, LTD., Tokyo 100 (JP)
(72) Inventor: Kioka, Mamoru, Waki-cho, Kuga-gun, Yamaguchi 740 (JP); Shinozaki, Tetsunori, Waki-cho, Kuga-gun, Yamaguchi 740 (JP)
(74) Representative: Cresswell, Thomas Anthony

(56) References cited:
- EP-A- 0 361 494
- EP-A- 0 362 705
- EP-A- 0 451 645
- GB-A- 966 025
- US-A- 4 397 763

## Description

### FIELD OF THE INVENTION

This invention relates to solid catalyst components, prepolymerized polyolefin-containing catalysts, catalysts and method of polymerization for the preparation of homopolymer of ethylene or α-olefin, or copolymers thereof.

### BACKGROUND OF THE INVENTION

Catalysts containing activated titanium compounds supported by magnesium halides are hitherto known as those for use in the preparation of homopolymer of ethylene or α-olefin, or olefin polymers such as an ethylene/α-olefin copolymers.

The olefin polymerization catalysts as referred to above (hereinafter they are sometimes used, including also copolymerization catalysts) are known to include such catalysts as comprising a solid titanium catalyst component containing magnesium, titanium, halogen and an electron donor, and an organometallic compound catalyst component.

The catalysts mentioned above have high activities in polymerization or copolymerization of α-olefin such as propylene or butene-1 (hereinafter the term polymerization is sometimes used, including also copolymerization) as well as in polymerization of ethylene. In addition thereto, the polymers or copolymers obtained by the use of these catalysts are high in stereospecificity.

Of the catalysts as mentioned above, those comprising in particular a solid titanium catalyst component having supported thereon an electron donor selected from carboxylic esters, a typical example of which is phthalic ester, an aluminum-alkyl compound as a co-catalyst and a silicon compound having at least one Si-OR linkage (wherein R is a hydrocarbon radical) exhibit excellent performance when they are used in the above-mentioned polymerization or copolymerization.

Solid catalyst components for the polymerization of olefins modified with electron-donor compounds, comprising a titanium halide supported on a magnesium dihalide in active form and containing as an electron-donor compound a di- or polyester having specific reactivity characteristics towards MgCl₂ and TiCl₄ have been described in EP-A-0361494.

EP-A-0362705 describes catalysts for the polymerization of olefins wherein the catalyst is obtained by the reaction of an Al-alkyl compound; an ether containing at least two ether groups which can form complexes with anhydrous magnesium dichloride; and a solid catalyst component comprising an anhydrous magnesium dihalide in active form and having supported thereon a titanium compound containing at least a Ti-halogen bond and an electron-donor compound which is extractable with Al-triethyl.

The present inventors conducted researches with the view of obtaining olefin polymerization catalysts excellent by far in polymerization activity and stereospecificity, and have eventually accomplished the present invention on the basis of their finding that an object of the invention can be best attained by using a catalyst comprising a solid titanium catalyst component containing magnesium, halogen, titanium and a compound having two or more ether linkages with a plurality of intermediately existing bonding atoms, or a catalyst comprising a solid titanium catalyst component containing magnesium, titanium, halogen and an electron donor, an organometallic compound and the above-mentioned compound having two or more ether linkages.

In this connection, it has been found that polymers low in stereospecificity are obtained by the use of a catalyst system comprising a solid catalyst component obtained by contact of a solid component containing magnesium, titanium, halogen atom and an electron donor with an alkoxy-containing aromatic compound having 1-6 alkoxy groups substituted in the benzene ring, in combination with an organoaluminum compound (Japanese Patent L-O-P Publn. No. 236203/1989).

### OBJECT OF THE INVENTION

The present invention has been made in view of such circumstances as mentioned above, and an object of the invention is to provide a solid titanium catalyst component, a prepolymerized polyolefin-containing catalyst and a olefin polymerization catalyst, which are prepared by using a specific electron donor, high in catalytic activity and capable of giving olefin (co-)polymers high in stereospecificity, and methods of olefin polymerization using said olefin polymerization catalysts.

### SUMMARY OF THE INVENTION

By using a compound having two or more ether linkages as an electron donor in the solid titanium catalyst component of the invention, it is possible to obtain an olefin polymerization catalyst which is high in activity even when an electron donor is not used further at the time of polymerization and capable of giving polymers high in stereospecificity.

Furthermore, by virtue of the presence of the solid titanium catalyst component of the invention, it is possible to obtain an olefin polymerization catalyst which is capable of giving polymers higher by far in stereospecificity by using the above-mentioned compound having two or more ether linkages or a specific electron donor at the time of polymerization.

The present invention provides an olefin polymerisation catalyst comprising:
[Ia-IIa] a pre-polymerized polyolefin-containing catalyst comprising [Ia] a solid titanium catalyst component containing titanium, magnesium, halogen and a compound having at least two ether linkages with a plurality of intermediately existing bonding atoms, and
[IIa] an organometallic compound catalyst component containing a metal belonging to Groups I-III of the periodic table, and a preliminarily polymerized polyolefin obtainable from an α-olefin of 2-20 carbon atoms,
[IIa] an organometallic compound catalyst component containing a metal selected from Groups I-III of the periodic table, and
[III] an electron donor (c) which comprises at least one of a compound having at least two ether linkages with a plurality of intermediately existing bonding atoms, and a compound represented by RₙSi(OR')₄₋ₙ, wherein R and R' are each a hydrocarbon radical, and 0<n<4.

By virtue of the use of the prepolymerized polyolefin-containing catalyst described herein, it is possible to obtain an olefin polymerization catalyst which is high in activity when an electron donor is further used at the time of polymerization, and capable of giving polymers high in stereospecificity.

The first method of olefin polymerization of the invention comprises polymerizing ethylene and/or α-olefin in the presence of the first olefin polymerization catalyst of the invention.

By virtue of the use of the first olefin polymerization catalyst comprising the components [Ia-IIa] and [IIa] in the first method of olefin polymerization of the invention, the polymerization reaction efficiently proceeds with high catalytic activity, giving polymers high in stereospecificity, particularly because the catalyst used contains the above-mentioned electron donors (c) in addition to the above-mentioned two components.

The present invention further provides a second olefin polymerization catalyst comprising:
[Ib-IIa-IIIa] a pre-polymerized polyolefin-containing catalyst comprising [Ib] a solid titanium catalyst component containing titanium, magnesium, halogen and a polycarboxylic acid ester compound, [IIa] an organometallic compound catalyst component containing a metal selected from Groups I-III of the periodic table, and [IIIa] a compound having at least two ether linkages with a plurality of intermediately existing bonding atoms, and a preliminary polymerized polyolefin obtainable from an α-olefin of 2-20 carbon atoms,
[IIa] an organometallic compound catalyst component containing a metal selected from Groups I-III of the periodic table, and optionally
[III] an electron donor (c) which comprises at least one of a compound having at least two ether linkages with a plurality of intermediately existing bonding atoms and a compound represented by the formula RₙSi(OR')₄₋ₙ, wherein R and R' are each a hydrocarbon radical, and 0<n<4.

By virtue of the use of the second prepolymerized polyolefin-containing catalyst described herein, it is possible to obtain an olefin polymerization catalyst which is high in activity-even when an electron donor is further used at the time of polymerization, and capable of giving the polymers high in stereospecificity.

The second method of olefin polymerization of the invention comprises polymerizing or copolymerizing ethylene and/or α-olefin in the presence of the second olefin polymerization catalyst of the invention.

By virtue of the use of the second olefin polymerization catalyst in the second method of olefin polymerization of the invention, the polymerization reaction efficiently proceeds with high catalytic activity, giving polymers high in stereospecificity in that case, when the organometallic compound [IIa] and [III].the electron donor (c) are used in addition to the prepolymerized olefin-containing catalyst [Ib-IIa-III].

### BRIEF DESCRIPTION OF THE DRAWINGS

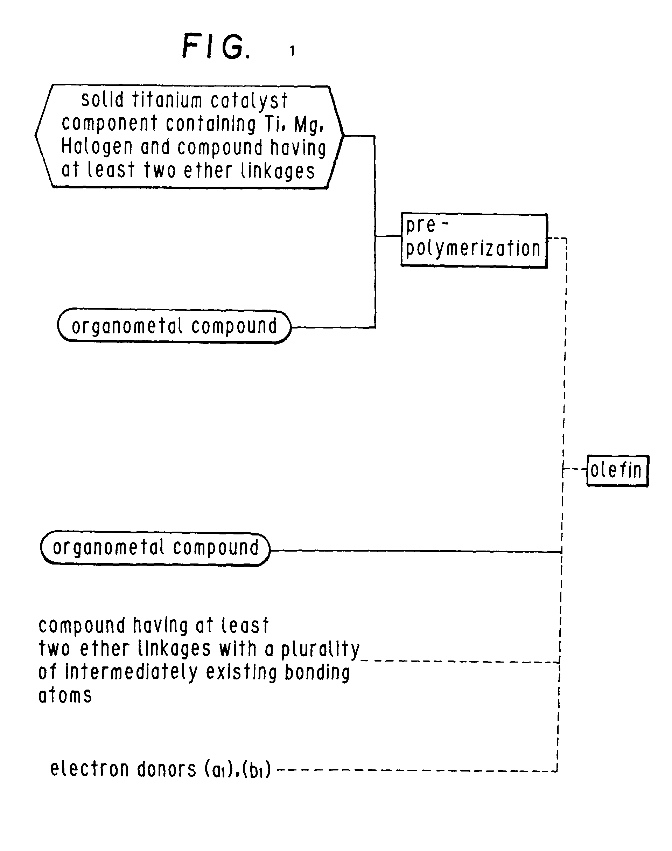

Figs. 1-2 are given to illustrate concrete examples of the processes for the preparation of the olefin polymerization catalysts.

### DETAILED DESCRIPTION OF THE INVENTION

The catalysts used for the prepolymerized polyolefin-containing catalysts and the olefin polymerization methods of the present invention are prepared by using specific solid titanium catalyst components [Ia] and [Ib], respectively.

The solid titanium catalyst component Ia or Ib may be prepared by the contact of a magnesium compound, a titanium compound and the above-mentioned compound having at least two ether linkages or polycarboxylic acid ester compound.

The magnesium compound used in the preparation of the solid titanium component includes those having reducing ability or those having no reducing ability.

The magnesium compounds having reducing ability referred to above include, for example, organomagnesium compounds represented by the formula XₙMgR₂₋ₙ wherein n is 0≤n<2, R is hydrogen, alkyl of 1-20 carbon atom, aryl or cycloalkyl, when n is 0, Rs may be the same or different, and X is halogen.

Concrete examples of such organomagnesium compounds as having reducing ability include dimethylmagnesium, diethylmagnesium, dipropylmagnesium, dibutylmagnesium, diamylmagnesium, dihexylmagnesium, didecylmagnesium, methylmagnesium chloride, propylmagnesium chloride, butylmagnesium chloride, hexylmagnesium chloride, amylmagnesium chloride, butylethoxymagnesium, ethylbutylmagnesium, octylbutylmagnesium, butylmagnesium hydride. These magnesium compounds exemplified above may be singly, or they may form complex compounds with organoaluminum compounds which will be mentioned later. These magnesium compounds used may be either a liquid or a solid.

Concrete examples of the magnesium compounds having no reducing ability include;
magnesium halides such as magnesium chloride, magnesium bromide, magnesium iodide and magnesium fluoride;
alkoxymagnesium halides such as methoxymagnesium chloride, ethoxymagnesium chloride, isopropoxymagnesium chloride, butoxymagnesium chloride and octoxymagnesium chloride;
aryloxymagnesium halides such as phenoxymagnesium chloride and methylphenoxymagnesium chloride;
alkoxymagnesiums such as ethoxymagnesium, isopropoxy magnesium, butoxymagnesium, n-octoxymagnesium and 2-ethylhexoxymagnesium;
aryloxymagnesiums such as phenoxymagnesium and dimethylphenoxymagnesium;
magnesium carboxylates such as magnesium laurate and magnesium stearate.

The magnesium compounds having no reducing ability exemplified above may be those derived from the above-mentioned magnesium compounds having reducing ability or may be those derived at the time of preparation of the catalyst component. The magnesium compounds having no reducing ability may be derived from the magnesium compounds having reducing ability, for example, by bringing the magnesium compounds having reducing ability into contact with a halogen containing compound or a compound having OH group or active carbon-oxygen bond such as polysiloxane compounds, halogen containing silane compounds, halogen containing aluminum compounds, esters or alcohols.

Besides the above-mentioned magnesium compounds having reducing ability or having no reducing ability, the magnesium compounds used for the purposes intended may be complex compounds or double compounds with other metals or mixtures with other metals. Furthermore, the magnesium compounds used may be mixtures of two or more kinds of the above-mentioned compounds, and they may be used either in a liquid or solid state. When the magnesium compounds used are solid, they may be liquefied with alcohols, carboxylic acids, aldehydes, amines and esters of metallic salts.

Of these magnesium compounds, preferred are those having no reducing ability, especially those containing halogen. Of the halogen containing magnesium compounds, preferred are magnesium chloride, alkoxy magnesium chloride and aryloxy magnesium chloride.

As the titanium compound used in the preparation of the solid titanium component, a titanium compound in the liquid state is preferred and includes, for example, tetravalent titanium compound represented by the general formula

Ti (OR)_{g} X_{4-g}

wherein R is a hydrocarbon radical, X is halogen, and 0≤g≤4. More concretely, these titanium compounds in the liquid state include titanium tetrahalide such as TiCl₄, TiBr₄ or TiI₄; alkoxy titanium trihalide such as Ti(OCH₃)Cl₃, Ti(OC₂H₅)Cl₃, Ti(On-C₄H₉)Cl₃, Ti(OC₂H₅)Br₃ or Ti(Oiso-C₄H₉)Br₃; alkoxy titanium dihalide such as Ti(OCH₃)₂Cl₂, Ti(OC₂H₅)₂Cl₂, Ti(On-C₄H₉)₂Cl₂ or Ti(OC₂H₅)₂Br₂; alkoxy titanium monohalide such as Ti(OCH₃)₃Cl, Ti(OC₂H₅)₃Cl, Ti(On-C₄H₉)₃Cl or Ti(OC₂H₅)₃Br; and tetraalkoxy titanium such as Ti(OCH₃)₄, Ti(OC₂H₅)₄, Ti(On-C₄H₉)₄, Ti(Oiso-C₄H₉)₄, Ti(O-2-ethylhexyl) ₄, Ti(OCH₃)₄, Ti(OC₂H₅)₄, Ti(On-C₄H₉)₄, Ti(Oiso-C₄H₉)₄ or Ti(o-2-ethylhexyl)₄.

Of these liquid titanium compounds exemplified above, preferred are titanium tetrahalides, especially titanium tetrachloride. These titanium compounds may be used either singly or in admixture, or may be used after dilution in hydrocarbon or halogenated hydrocarbon.

In the solid titanium component used in the olefin polymerization catalyst of the invention, there is used an electron donor compound (a₀) having at least two ether linkages with a plurality of intermediately existing bonding atoms or a polycarboxylic acid ester compound (a₁).

The compound having at least two ether linkages used in the preparation of the solid titanium compound of the invention includes those having the above intermediately existing bonding atoms composed of at least one kind of atom selected from among carbon, silicon, oxygen, sulfur, phosphorus and boron. Of these compounds mentioned above, preferred are those in which a relatively bulky substituent attaches to the atom intermediately existing between the ether linkages and a plurality of carbon atoms are contained in the atoms existing between at least two ether linkages.

Such compound having at least two ether linkages as mentioned above includes, for example, those represented by the following formula 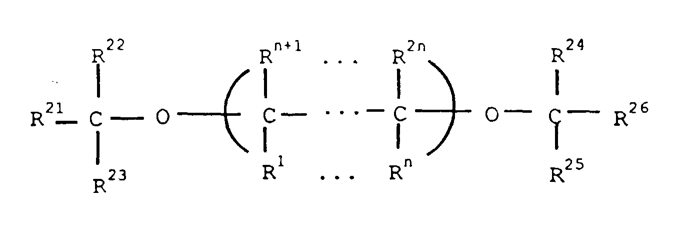 wherein n is an integer of 2≤n≤10, R¹-R²⁶ are each a substituent having at least one element selected from among carbon, hydrogen, halogen, nitrogen, sulfur, phosphorus, boron and silicon, any of R¹-R²⁶, preferably R¹-R²ⁿ may form, together a ring other than a benzene ring, and the main chain of the compound may contain atoms other than carbon.

The compound having at least two ether linkages as illustrated above includes 2-(2-ethylhexyl)-1,3-dimethoxypropane, 2-isopropyl-1,3-dimethoxypropane, 2-butyl-1,3-dimethoxypropane, 2-s-butyl-1,3-dimethoxypropane, 2-cyclohexyl-1,3-dimethoxypropane, 2-phenyl-1,3-dimethoxypropane, 2-cumyl-1,3-dimethoxypropane, 2-(2-phenylethyl)-1,3-dimethoxypropane, 2-(2-cyclohexylethyl)-1,3-dimethoxypropane, 2-(p-chlorophenyl)-1,3-dimethoxypropane, 2-(diphenylmethyl)-1,3-dimethoxypropane, 2-(1-naphthyl)-1,3-dimethoxypropane, 2-(2-fluorophenyl)-1,3-dimethoxypropane, 2-(1-decahydronaphthyl)-1,3-dimethoxypropane, 2-(p-t-butylphenyl)-1,3-dimethoxypropane, 2,2-dicyclohexyl-1,3-dimethoxypropane, 2,2-diethyl-1,3-dimethoxypropane, 2,2-dipropyl-1,3-dimethoxypropane, 2,2-dibutyl-1,3-dimethoxypropane, 2-methyl-2-propyl-1,3-dimethoxypropane, 2-methyl-2-benzyl-1,3-dimethoxypropane, 2-methyl-2-ethyl-1,3-dimethoxypropane, 2-methyl-2-iso-propyl-1,3-dimethoxypropane, 2-methyl-2-phenyl-1,3-dimethoxypropane, 2-methyl-2-cyclohexyl-1,3-dimethoxypropane, 2,2-bis(p-chlorophenyl)-1,3-dimethoxypropane, 2,2-bis(2-cyclohexylethyl)-1,3-dimethoxypropane, 2-methyl-2-iso-butyl-1,3-dimethoxypropane, 2-methyl-2-(2-ethylhexyl)-1,3-dimethoxypropane, 2,2-di-isobutyl-1,3-dimethoxypropane, 2,2-diphenyl-1,3-dimethoxypropane, 2,2-dibenzyl-1,3-dimethoxypropane, 2,2-bis(cyclohexylmethyl)-1,3-dimethoxypropane, 2,2-di-iso-butyl-1,3-diethoxypropane, 2,2-di-iso-butyl-1,3-dibutoxypropane, 2-iso-butyl-2-iso-propyl-1,3-dimethoxypropane, 2,2-di-s-butyl-1,3-dimethoxypropane, 2,2-di-t-butyl-1,3-dimethoxypropane, 2,2-dineopentyl-1,3-dimethoxypropane, 2-iso-propyl-2-isopentyl-1,3-dimethoxypropane, 2-phenyl-2-benzyl-1,3-dimethoxypropane, 2-cyclohexyl-2-cyclohexylmethyl-1,3-dimethoxypropane, 2,3-diphenyl-1,4-diethoxybutane, 2,3-dicyclohexyl-1,4-diethoxybutane, 2,2-dibenzyl-1,4-diethoxybutane, 2,3-dicyclohexyl-1,4-diethoxybutane, 2,3-di-iso-propyl-1,4-diethoxybutane, 2,2-bis(p-methylphenyl)-1,4-dimethoxybutane, 2,3-bis(p-chlorophenyl)-1,4-dimethoxybutane, 2,3-bis(p-fluorophenyl)-1,4-dimethoxybutane, 2,4-diphenyl-1,5-dimethoxypentane, 2,5-diphenyl-1,5-dimethoxyhexane, 2,4-di-iso-propyl-1,5-dimethoxypentane, 2,4-di-iso-butyl-1,5-dimethoxypentane, 2,4-di-iso-amyl-1,5-dimethoxypentane, 3-methoxymethyltetrahydrofuran, 3-methoxymethyldioxane, 1,3-di-iso-amyloxypropane, 1,2-di-iso-butoxypropane, 1,2-di-isobutoxyethane, 1,3-di-iso-amyloxyethane, 1,3-di-iso-amyloxypropane, 1,3-di-iso-neopentyloxyethane, 1,3-dineopentyloxypropane, 2,2-tetramethylene-1,3-dimethoxypropane, 2,2-pentamethylene-1,3-dimethoxypropane, 2,2-hexamethylene-1,3-dimethoxypropane, 1,2-bis(methoxymethyl)cyclohexane, 2,8-dioxaspiro[5,5]undecane, 3,7-dioxabicyclo[3,3,1]nonane, 3,7-dioxabicyclo[3,3,0]octane, 3,3-di-iso-butyl-1,5-oxononane, 6, 6-di-iso-butyldioxyheptane, 1,1-dimethoxymethylcyclopentane, 1,1-bis(dimethoxymethyl)cyclohexane, 1,1-bis(methoxymethyl)bicyclo[2,2,1]heptane, 1,1-dimethoxymethylcyclopentane, 2-methyl-2-methoxymethyl-1,3-dimethoxypropane, 2-cyclohexyl-2-ethoxymethyl-1,3-dimethoxypropane, 2-cyclohexyl-2-methoxyethyl-1,3-dimethoxypropane, 2,2-di-iso-butyl-1,3-dimethoxycyclohexane, 2-iso-propyl-2-iso-amyl-1,3-dimethoxycyclohexane, 2-cyclohexyl-2-methoxymethyl-1,3-diethoxycyclohexane, 2-isopropyl-2-methoxymethyl-1,3-dimethoxycyclohexane, 2-iso-butyl-2-methoxymethyl-1,3-dimethoxycyclohexane, 2-cyclohexyl-2-ethoxymethy-1,3-diethoxycyclohexane, 2-cyclohexyl-2-ethoxymethyl-1,3-dimethoxycyclohexane, 2-iso-propyl-2-ethoxymethyl-1,3-dimethoxycyclohexane, 2-iso-propyl-2-ethoxymethyl-1,3-dimethoxycyclohexane, 2,-iso-butyl-2-ethoxymethyl-1,3-diethoxycyclohexane, 2-iso-butyl-2-ethoxymethyl-1,3-dimethoxycyclohexane, tris(p-methoxyphenyl)phosphine, methylphenylbis(methoxymethyl)silane, diphenylbis(methoxymethyl)silane, methylcyclohexylbis(methoxymethyl)silane, di-t-butylbis(methoxymethyl)silane, cyclohexyl-t-butylbis(methoxymethyl)silane and iso-propyl-t-butylbis(methoxymethyl)silane.

Of these compounds, preferred are 1,3-diethers, especially, 2,2-di-iso-butyl-1,3-dimethoxypropane, 2-iso-propyl-2-iso-pentyl-1,3-dimethoxypropane, 2,2-dicyclohexyl-1,3 dimethoxypropane and 2,2-bis(cyclohexylmethyl)1,3-dimethoxypropane.

Polycarboxylic acid esters used in the solid titanium catalyst component [Ib] include such compounds as having a skeleton represented by the following general formula. 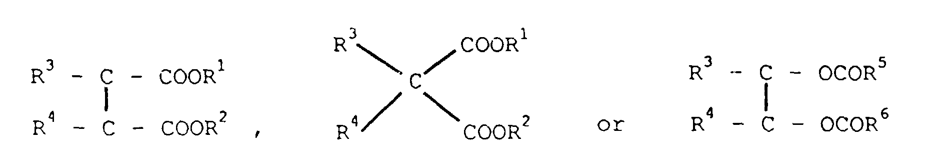 wherein R¹ is a substituted or unsubstituted hydrocarbon radical, R², R⁵ and R⁶ are each hydrogen or a substituted or unsubstituted hydrocarbon radical, R³ and R⁴ are each hydrogen or a substituted or unsubstituted hydrocarbon radical, preferably at least one of R², R⁵ and R⁶, and at least one of R³ and R⁴ is a substituted or unsubstituted hydrocarbon radical, R³ and R⁴ may be connected to each other, and when R¹-R⁶ are each a substituted hydrocarbon radical, the substituent thereof includes such groups as containing at least one atom different from carbon atom such as N, O, or S, for example, C-O-C, COOR, COOH, OH, SO₃H, -C-N-C- and NH₂.

Such polycarboxylic acid esters as illustrated above include concretely; aliphatic polycarboxylates such as diethyl succinate, dibutyl succinate, diethyl methylsuccinate, di-iso-butyl alpha-methylglutamate, diethyl methylmalonate, diethyl ethylmalonate, diethyl iso-propylmalonate, diethyl butylmalonate, diethyl phenylmalonate, diethyl diethylmalonate, diethyl dibutylmalonate, monooctyl maleate, dioctyl maleate, dibutyl maleate, dibutyl butylmaleate, diethyl butylmaleate, di-iso-propyl beta-metylglutarate, diallyl ethylsuccinate, di-2-ethylhexyl fumarate diethyl itaconate and dioctyl citrate; cycloaliphatic polycarboxylates suh as diethyl 1,2-cyclohexanecarboxylate, di-iso-butyl 1,2-cyclohexanecarboxylate, diethyl tetrahydrophthalate and diethyl nadate; aromatic polycarboxylates such as monoethyl phthalate, dimethyl phthalate, methylethyl phthalate, mono-iso-butyl phthalate, diethyl phthalate, ethyl-iso-butyl phthalate, di-n-propyl phthalate, di-iso-propyl phthalate, di-n-butyl phthalate, di-iso-butyl phthalate, di-n-heptyl phthalate, di-2-ethyhexyl phthalate, di-n-octyl phthalate, dineopentyl phthalate, didecyl phthalate, benzylbutyl phthalate, diphenyl phthalate, diethyl naphtalenedicarboxylate, dibutyl naphthalene dicarboxylate, triethyl trimellitate, dibutyl trimellitate; and heterocyclicpolycarboxylates such as 3,4-furane dicarboxylate.

Examples of polycarboxylic acid esters other than those exemplified above include long dicarboxylic acid esters such as diethyl adipate, di-iso-butyl adipate, di-iso-propyl sebacate, di-n-butyl sebacate, di-n-octyl sebacate, di-2-ethylhexyl sebacate. Of these compounds exemplified above, preferred are carboxylic acid esters, especially polycarboxylic acid esters and, in particular, phthalic esters.

The solid titanium component used in the invention may also be prepared by bringing the above-mentioned magnesium compound, liquid titanium compound and electron donor (a₀) into contact with a carrier compound and an organic and inorganic compound containing silicon, phosphorus or aluminum used as a reaction assistant.

As the carrier compound referred to above, there may be mentioned Al₂O₃, SiO₂, B₂O₃, MgO, CaO, TiO₂, ZnO, ZnO₂, SnO₂, BaO, ThO, and such resins as styrene/divinylbenzene copolymers. Of these carrier compounds, preferred are, Al₂O₃, SiO₂ and styrene/divinylbenzene copolymers.

The electron donor (a₀) is not always used as a starting material, and it may also be formed in the course of preparation of the solid titanium component.

The solid titanium component used in the invention is prepared by bringing the above-mentioned magnesium compound, liquid titanium compound and electron donor (a₀) into contact with one another.

Briefly set below, by way of illustration but not of limitation, are several examples of the process for the preparation of the solid titanium component.
(1) A process wherein the above-mentioned magnesium compound, compound having at least two ether linkages, and titanium compound are brought into contact with one another in any order, and the contacted mixture is allowed to undergo reaction. In carrying out this reaction, each reactant may be pretreated with a reaction assistant such as the compound having at least two ether linkages and/or the electron donor (a₁), an organoaluminum compound or a halogen containing silicon compound.
(2) A process wherein a liquid magnesium compound having no reducing ability is allowed to react with a liquid titanium compound in the presence of the above-mentioned compound having at least two ether linkages, thereby depositing a solid magnesium titanium composite.
(3) A process wherein the reaction product obtained in the process (2) is allowed to react further with a titanium compound.
(4) A process wherein the reaction product obtained in the process (1) or (2) is allowed to react further with an electron donor (a₀) and a titanium compound.
(5) A process wherein a solid product obtained by pulverizing a magnesium compound, the above-mentioned compound having at least two ether linkages and a titanium compound is treated with any of halogen, a halogen containing compound and an aromatic hydrocarbon. This process may contain a step of pulverizing only the magnesium compound or the magnesium compound and the compound having at least two ether linkages, or the magnesium compound and the titanium compound in the presence of or in the absence of a pulverizing assistant. The pulverized product may be pretreated with a reaction assistant, followed by treatment with halogen. The reaction assistant used herein includes organoaluminum compounds or halogen containing silicon compounds.
(6) A process wherein the solid product obtained in the processes (1) to (4), respectively, is treated with halogen, a halogen compound or an aromatic hydrocarbon.
(7) A process wherein a catalytic reaction product resulting from the reaction of a metallic oxide with an organomagnesium compound and a halogen containing compound is brought into contact with the above-mentioned compound having at least two ether linkages and a titanium compound.
(8) A process wherein a magnesium compound such as magnesium salt of an organic acid, alkoxymagnesium or aryloxymagnesium is brought into contact with the above-mentioned compound having at least two ether linkages, and at least one compound selected from among a titanium compound and a halogen containing hydrocarbon.
(9) A process wherein a hydrocarbon solution containing at least a magnesium compound and alkoxytitanium, a titanium compound, the above-mentioned compound having at least two ether linkages and, if necessary, a halogen containing compound such as a halogen containing silicon compound are allowed to undergo reaction.
(10) A process wherein a magnesium compound in the liquid state having no reducing ability is allowed to react with an organoaluminum compound to deposit a solid magnesium aluminum composite, followed by reaction with the above-mentioned compound having at least two ether linkages and a titanium compound.

The amounts of the magnesium compound, titanium compound in the liquid state and electron donor (a₀) used in the preparation of the solid titanium component (A) by the above-illustrated processes vary depending upon the kind of each compound used, conditions, and contacting order. Generally, however, there are used, based on 1 mole of the magnesium compound, the electron donor (a₀) in an amount of 0.01-5 moles, preferably 0.1-1 mole, and the liquid titanium compound in an amount of 0.1-1000 moles, preferably 1-200 moles.

The temperature at which these compounds are brought into contact with one another is usually from -70° to 200°C, preferably -30-150°C.

The solid titanium component (A) thus obtained contains titanium, magnesium, halogen and electron donor (a₀).

In this solid titanium component (A), halogen/titanium (atomic ratio) is 2-100, preferably 4-90, electron donor (a₀)/titanium (molar ratio) is 0.01-100, preferably 0.2-10, and magnesium/titanium (atomic ratio) is 2-100, preferably 4-50.

The solid titanium catalyst component [Ia] or [Ib] for olefin polymerization of the present invention is formed by bringing the above-mentioned solid titanium component (A) into contact with (B) an electron donor (b₀).

The electron donor (b₀) used herein includes, in addition to the above-mentioned electron donor (a₀), that is, the compound having at least two ether linkages and the electron donor (a₁), an electron donor (b₁) including an organosilicon compound, a nitrogen containing compound, an oxygen containing compound and a phosphorus containing compound. Of these compound, preferred are the compound having at least two ether linkages and the organosilicon compound. The organosilicon compound used as the electron donor (b₁) includes those represented by the following general formula.

Rₙ Si (OR')₄₋ₙ

wherein R and R' are each a hydrocarbon radical, and 0<n<4.

The organosilicon compound represented by the above-mentioned general formula includes concretely trimethylmethoxysilane, trimetylethoxysilane, dimetyldimethoxysilane, dimethyldiethoxysilane, di-iso-propyldimethyoxysilane, t-butylmethyldimethoxysilane, t-butylethyldimethoxysilane, t-amylmethyldiethoxysilane, diphenyldimethoxysilane, phenylmethyldimethoxysilane, diphenyldiethoxysilane, bis-o-tolyldimethoxysilane, bis-m-tolyldimethoxysilane, bis-p-tolyldimethoxysilane, bis-p-tolyldiethoxysilane, bis(ethylphenyl)dimethoxysilane, dicyclohexyldimethoxysilane, cyclohexylmethyldimethoxysilane, cyclohexylmethyldiethoxysilane, ethyltrimethoxysilane, ethyltriethoxysilane, vinyltrimethoxysilane, methyltrimethoxysilane, n-propyltriethoxysilane, decyltrimethoxysilane, decyltriethoxysilane, phenyltrimethoxysilane, gamma-chloropropyltrimethoxysilane, methyltriethoxysilane, ethyltriethoxysilane, vinyltriethoxysilane, t-butyltriethoxysilane, n-butyltriethoxysilane, iso-butyltriethoxysilane, phenyltriethoxysilane, gamma-aminopropyltriethoxysilane, chlorotriethoxysilane, ethyltri-iso-propoxysilane, vinyltributoxysilane, cyclohexyltrimethoxysilane, cyclohexyltriethoxysilane, 2-norbornanetrimethoxysilane, 2-norbornanetriethoxysilane, 2-norbornanemethyldimethoxysilane, ethyl silicate, butyl silicate, trimethylphenoxysilane, methyltriallyloxysilane, vinyltris(beta-methoxyethoxysilane), vinyltriacetoxysilane, dimethyltetraethoxydisiloxane, cyclopentyltrimethoxysilane, 2-methylcyclopentyltrimethoxysilane, 2,3-dimethylcyclopentyltriethoxysilane, cyclopentyltrimethoxysilane, dicyclopentyldimethoxysilane, bis(2-methylcyclopentyl)dimethoxysilane, bis(2,3-dimethylcyclopentyl)dimethoxysilane, dicyclopentyldiethoxysilane, tricyclopentylmethoxysilane, tricyclopentylethoxysilane, dicyclopentylmethylmethoxysilane, dicyclopentylethylmethoxysilane, hexenyltrimethoxysilane, dicyclopentylmethylethoxysilane, cyclopentyldimethylmethoxysilane, cyclopentyldiethylmethoxysilane, cyclopentyldimethylethoxysilane. Of these compounds examplified above, prefferred are ethyltriethoxysilane, n-propyltriethoxysilane, t-butyltriethoxysilane, vinyl triethoxysilane, phenyl triethoxysilane, vinyl tribytoxysilane, diphenyldimethoxysilane, phenylmethyldimethoxysilane, bis-p-tolyldimethoxysilane, p-tolylmethyldimethoxysilane, dicyclohexylmethoxysilane, cyclohexylmethyldimethoxysilane, 2-norbornanetriethoxysilane, 2-norbornanemethyldimethoxysilane, phenyltriethoxysilane, dicyclopentyldimethoxysilane, hexenyltrimethoxysilane, cyclopentyltriethoxysilane, tricyclopentylmethoxysilane and cyclopentyldimethylmethoxysilane. These organosilicon compounds may also be used in admixture of two or more.

The first olefin polymerization catalyst of the present invention contains a solid titanium catalyst component [Ia] containing titanium, magnesium, halogen and a compound having at least two ether linkages with a plurality of intermediately existing bonding atoms, and the second olefin polymerization catalyst of the invention contains a solid titanium catalyst component [Ib] containing titanium, magnesium, halogen and the electron donor (a₁).

The solid titanium catalyst component [Ia] or [Ib] may be prepared by the contact of the magnesium compound, a titanium compound, the above-mentioned compound having at least two ether linkages or the electron donor (a₁) with one another, and said compounds are used in the preparation of the above-mentioned solid titanium component (A). In the case of the solid titanium catalyst component [Ia], however, the electron donor (a₁) may be used together with the compound having at least two ether linkages.

Furthermore, the solid titanium catalyst component [Ia] or [Ib] may also be prepared by the manner as mentioned above while using also the same organic and inorganic compounds as the carrier compounds or reaction assistants as used in the case of the preparation of the above-mentioned solid titanium component (A).

The above-mentioned electron donor (a₁) is not always used as a starting material, and can also be formed in the course of the preparation of the solid catalyst component [Ia] or [Ib].

The solid titanium catalyst component [Ia] is prepared, as illustrated above, by bringing the above-mentioned magnesium compound, liquid titanium compound, compound having at least two ether linkages and, if necessary, carrier compound and electron donor (a₁) into contact with one another.

Briefly set below, by way of illustration but not limitation, are several examples of the process for the preparation of the solid titanium catalyst component [Ia] using the above-mentioned compounds.
(1) A process wherein the magnesium compound, compound having at least two ether linkages and titanium compound are brought into contact with one another in any order and allowed to undergo reaction. In carrying out this reaction, each reactant may be pretreated with the compound having at least two ether linkages and/or the electron donor (a₁) or with a reaction assistant such as an organoaluminum compound or a halogen containing silicon compound.
(2) A process wherein a magnesium compound in the liquid state having no reducing ability is allowed to react with a titanium compound in the liquid state, thereby depositing a solid magnesium titanium composite.
(3) A process wherein the reaction product obtained in the process (2) is allowed to react further with the titanium compound.
(4) A process wherein the reaction product obtained in the process (1) or (2) is allowed to react further with the electron donor (a₁) and the titanium compound.
(5) A process wherein a solid product obtained by pulverizing the magnesium compound, compound having at least two ether linkages and titanium compound is treated with any of halogen, a halogen containing compound and an aromatic hydrocarbon. In this process, there may also be involved a step of pulverizing only the magnesium compound, or the magnesium compound and the compound having at least two ether linkages, or the magnesium compound and the titanium compound in the presence of or in the absence of a pulverizing assistant. After pulverization, the solid product obtained may be pretreated with the reaction assistant, followed by treatment with halogen or the like. The reaction assistant used includes an organoaluminum compound or a halogen containing silicon compound.
(6) A process wherein the product obtained in any of the processes (1) to (4) is treated with halogen, a halogen containing compound or an aromatic hydrocarbon.
(7) A process wherein a catalytic reaction product of a metallic oxide, an organomagnesium compound and a halogen containing compound is brought into contact with the compound having at least two ether linkages and the titanium compound.
(8) A process wherein a magnesium compound such as magnesium salt of an organic acid, alkoxymagnesium or allyloxymagnesium is brought into contact with the compound having at least two ether linkages,and at least one compound selected from among the titanium compound and a halogen containing hydrocarbon.
(9) A process wherein a hydrocarbon solution containing at least the magnesium compound and alkoxytitanium, the titanium compound, the compound having at least two ether linkages and, if necessary, a halogen containing compound such as a halogen containing silicon compound are allowed to undergo reaction.
(10) A process wherein a magnesium compound in the liquid state having no reducing ability is allowed to react with an organoaluminum compound, thereby depositing a solid magnesium aluminum composite, followed by reaction with the compound having at least two ether linkages and the titanium compound.

When the solid titanium catalyst component [Ia] is prepared by the processes as illustrated above, the amounts of the magnesium compound, liquid titanium compound and compound having at least two ether linkages vary depending upon the kind of the compounds used, contact conditions and contacting order employed. Generally, however, there may be used, based on 1 mole of magnesium atom of the magnesium compound, the compound having at least two ether linkages in an amount of 0.01-5 moles, preferably 0.1-1 mole, and the titanium compound in the liquid state in an amount of 0.1-1000 moles, preferably 1-200 moles.

The temperature at which these compounds are brought into contact with one another is usually from -70°C to 200°C, preferably 10-150°C.

The solid titanium catalyst component [Ia] contains titanium, magnesium, halogen and the above-mentioned compound having at least two ether linkages.

In this solid titanium catalyst component [Ia], halogen/titanium (atomic ratio) is 2-100, preferably 4-90, the compound having at least two ether linkages/titanium (molar ratio) is 0.01-100, preferably 0.2-10, and magnesium/ titanium (atomic ratio) is 2-100, preferably 4-50.

The solid titanium catalyst component [Ib] used in the present invention may be prepared by bringing the magnesium compound, titanium compound in the liquid state, electron donor (a₁) and, if necessary, the carrier compound into contact with one another.

Briefly set forth below, by way of illustration but not limitation, are several examples of the process for the preparation of the solid titanium catalyst component [Ib].
(1) A process wherein the magnesium compound, electron donor (a₁) and titanium compound are brought into contact with one another and allowed to undergo reaction. In carrying out this reaction, each compound may be pretreated with the electron donor (a₁) and/or a reaction assistant such as an organoaluminum compound or a halogen containing silicon compound. In this process, the electron donor (a₁) is used at least one time.
(2) A process wherein a magnesium compound in the liquid state having no reducing ability is allowed to react with the titanium compound in the liquid state in the presence of the electron donor (a₁), thereby depositing a solid magnesium titanium composite.
(3) A process wherein the reaction product obtained in the process (2) is allowed to react further with the titanium compound.
(4) A process wherein the reaction product obtained in the process (1) or (2) is allowed to react further with the electron donor (a₁) and the titanium compound.
(5) A process wherein a solid product obtained by pulverizing the magnesium compound, electron donor (a₁) and titanium compound is treated any of halogen, a halogen compound and an aromatic hydrocarbon. In this process, there may be involved a step of pulverizing only the magnesium compound, a complex compound consisting of magnesium compound and electron donor, or the magnesium compound and the titanium compound. After pulverization, the solid product obtained may be treated with a reaction assistant, followed by treatment with halogen. The reaction assistant used herein may include an organoaluminum compound or a halogen containing silicon compound.
(6) A process wherein the reaction product obtained in any of the processes of (1) to (4) is treated with halogen, a halogen compound or an aromatic hydrocarbon.
(7) A process wherein a catalytic reaction product of a metallic oxide, an organomagnesium and a halogen containing compound is brought into contact with the electron donor (a₁) and titanium compound.
(8) A process wherein a magnesium compound such as magnesium salt of an organic acid, alkoxymagnesium or aryloxymagnesium is allowed to react with the electron donor (a₁) and at least one compound selected from among titanium compound and/or a halogen containing hydrocarbon.
(9) A process wherein a hydrocarbon solution containing at least the magnesium compound and alkoxytitanium, the titanium compound, the electron donor (a₁) and, if necessary, a halogen containing compound such as a halogen containing silicon compound are allowed to undergo reaction.
(10) A process wherein a magnesium compound in the liquid state having no reducing ability is allowed to react with an organoaluminum compound to deposit a solid magnesium aluminum composite, followed by reaction with the electron donor (a₁) and titanium compound.

In preparing the solid titanium catalyst component [Ib] by the above-mentioned processes, the amounts of the magnesium compound, the titanium compound in the liquid state and the electron donor (a₁) used vary depending on the kind of the compound used, contacting conditions and contacting order. Generally, however, there may be used, based on 1 mole of magnesium, the electron donor (a₁) in an amount of 0.01-5 moles, preferably 0.1-1 mole, and the titanium compound in the liquid state in an amount of 0.1-1000 moles, preferably 1-200 moles.

The temperature at which these compounds are brought into contact with one another is usually from -70 to 200°C, preferably 10-150°C.

The solid titanium catalyst component [Ib] contains titanium, magnesium, halogen and the electron donor (a₁).

In this solid titanium catalyst component [Ib], halogen/titanium (atomic ratio) is 1-100, preferably 4-90, electron donor (a₁)/titanium (molar ratio) is 0.01-100, preferably 0.2-10, and magnesium/titanium (atomic ratio) is 2-100, preferably 4-50.

In the present invention, the prepolymerized polyolefin-containing catalysts are formed by using the above-illustrated solid titanium catalyst components [Ia] and [Ib], the organometallic compound catalyst components [IIa] and [IIb], and the electron donor components [III] and [IIIa] in specific combination.

In the olefin polymerization methods, there are used for prepolymerized olefin cantaining catalysts formed by using the above-illustrated solid titanium catalyst components [Ia] and [Ib], the organometallic compound catalyst components [IIa] and [IIb], and the electron donor components [III] and [IIIa] in specific combination.

The organometallic compound catalyst component [IIa] as used herein includes, for example, an organoaluminum compound, a complex alkylation product of a metal of Group I with aluminum, and an organometallic compound of a metal of Group II.

The organoaluminum compound mentioned above includes those represented by the formula R^{a}ₙAlX₃₋ₙ wherein R^{a} is a hydrocarbon radical of 1-12 carbon atoms, X is halogen or hydrogen, and n is 1-3.

In the above formula, R^{a} is a hydrocarbon radical of 1-12 carbon atoms, for example, alkyl, cycloalkyl or aryl, and concretely includes methyl, ethyl, n-propyl, isopropyl, isobutyl, pentyl, hexyl, octyl, cyclopentyl, cyclohexyl, phenyl or tolyl.

The organoaluminum compound illustrated above includes concretely such compounds as exemplified below.
trialkyl aluminiums such as trimethylaluminium, tri-iso-butylaluminium, trioctylaluminium, tri-ethylaluminium, tri-iso-propylaluminium, tri-2-ethylhexylaluminium;
alkenylaluminium such as iso-prenylaluminium;
dialkylaluminium halides such as dimethylaluminium chloride, diethylaluminium chloride, di-iso-propylaluminium chloride, di-iso-butylaluminium chloride, dimethylaluminium bromide;
alkylaluminium sesquihalide such as methylaluminium sesquichloride, ethylaluminiumsesquichloride, isopropylaluminium sesquichloride, butylaluminium sesquichloride, ethylaluminium sesquibromide;
alkylaluminium dihalides such as methylaluminium dichloride, ethylaluminium dichloride, iso-propylaluminium dichloride, ethylaluminium dibromide;
alkylaluminium hydrides such as diethylaluminium hydride, di-iso-butylalminium hydride:

As the organoaluminum compound, there may also be used such compounds as may be represented by the formula R^{a}ₙAlY₃₋ₙ wherein R^{a} is as defined above, Y is -OR^{b}, -OSiR^{c}₃, -OAlR^{d}₂, -NR^{e}₂, SiR^{f}₃ or 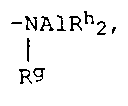 n is 1-2, R^{b}, R^{c}, R^{d} and R^{h} are each methyl, ethyl, isopropyl, isobutyl, cyclohexyl, or phenyl, R^{e} is hydrogen, methyl, ethyl, isopropyl, phenyl or trimethylsilyl, and R^{f} and R^{g} are each methyl or ethyl.

Concretely, such organoaluminum compounds as illustrated above include those having the following formulas.
(i) Compounds of the formula R^{a}ₙAl(OR^{b})₃₋ₙ such as dimethylaluminum methoxide, diethylaluminum ethoxide and diisobutylaluminum methoxide,
(ii) compounds of the formula R^{a}ₙAl(OSiR^{c}₃)₃₋ₙ such as Et₂Al(OSiMe₃), (iso-Bu)₂Al(OSiMe₃) and (iso-Bu)₂Al(OSiEt₃),
(iii) compounds of the formula R^{a}ₙAl(OAR^{d}₂)₃₋ₙ such as Et₂AlOAlEt₂, and (iso-Bu)₂AlOAl(iso-Bu)₂,
(iv) compounds of the formula R^{a}ₙAl(NR^{e}₂)₃₋ₙ such as Me₂AlNEt₂, Et₂AlNHMe, Me₂AlNHEt, Et₂AlN(Me₃Si)₂ and (iso-Bu)₂AlN(Me₃Si)₂,
(v) compounds of the formula R^{a}ₙAl(SiR^{f}₃)₃₋ₙ such as (iso-Bu)₂AlSiMe₃, and
(vi) Compounds of the formula 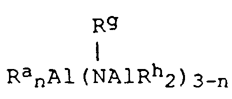 such as

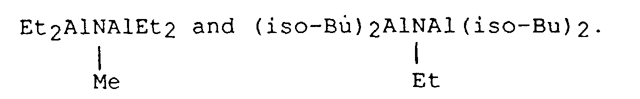

Preferred examples of the above-exemplified organoaluminum compounds are those represented by the formula R^{a}₃Al, R^{a}ₙAl(OR^{b})₃₋ₙ and R^{a}ₙAl(OAlR^{d}₂)₃₋ₙ.

The complex alkylation product of a metal of Group I with aluminum is exemplified by a compound represented by the general formula

M¹ Al R^{j} ₄

wherein M¹ is Li, Na or K, and R^{j} is a hydrocarbon radical of 1-15 carbon atoms, and includes concretely LiAl(C₂H₅)₄ and LiAl(C₇H₁₅)₄.

The organometallic compound containing a metal of Group II is exemplified by a compound represented by the general formula R¹R^{k}M₂ wherein R^{k} and R¹ are each a hydrocarbon radical of 1-15 atoms or halogen, provided that both R^{k} and R¹ do not represent halogen, though may be the same or different, M₂ is Mg, Zn or Cd, and includes concretely diethylzinc, diethylmagnesium, butylethylmagnesium, ethylmagnesium chloride and butylmagnesium chloride. These compounds may be used in admixture of two or more.

In preparing the first olefin polymerization catalyst of the invention, if necessary, there may be used the electron donor (c) [III] including a compound having at least two ether linkages with a plurality of intermediately existing bonding atoms. In this case, however, besides the compound having at least two ether linkages, there may also be used, for example, the electron donor (a₁) used in the preparation of the solid titanium catalyst component [Ia] or [Ib] of the invention.

As an organoaluminum compound containing no halogen, there may be mentioned the organoaluminum compound represented by the aforementioned formula R^{a}ₙAlX₃₋ₙ in which n=3, for example, trialkylaluminum and alkenylaluminum.

Further, the organoaluminum compound containing no halogen may be exemplified by the compound represented by the aforementioned formula R^{a}ₙAlY₃₋ₙ.

As the halogen containing organoaluminum compound, there may be mentioned the organoaluminum compound represented by the aforementioned formula R^{a}ₙAlX₃₋ₙ in which 1≤n<3, for example, dialkylaluminum halide, alkylaluminum sesquihalide and alkylaluminum dihalide.

The first prepolymerized polyolefin-containing catalyst of the present invention, which is used in the olefin polymerization method, is prepared by polymerizing olefin by using an olefiii polymerization catalyst containing the solid titanium catalyst component [Ia] defined herein and the organometallic compound catalyst component [IIa] defined herein containing a metal selected from among those belonging to Groups I to III of the periodic table.

In the first prepolymerized polyolefin-containing catalyst of the invention, there is used the electron donor (c), that is, the compound having at least two ether linkages and an organosilicon component exemplified as the electron donor (b₁), together with the above-mentioned organometallic compound catalyst component [IIa].

The second prepolymerized polyolefin-containing catalyst of the invention, which is used in the olefin polymerization method, contains an olefin polymerization catalyst containing the above-mentioned solid titanium catalyst component [Ib], the organometallic compound catalyst component [IIa] defined herein and the compound [IIIa] as defined herein having at least two ether linkages with a plurality of intermediately existing bonding atoms.

The second prepolymerized polyolefin-containing catalyst of the invention may contain an electron donor in addition to the above-mentioned compound having at least two ether linkages, for example, the electron donors (a₁) and (b₁) used in the preparation of the first olefin polymerization catalyst of the invention.

The first prepolymerized polyolefin-containing catalyst [Ia-IIa-IIIa] of the invention may be formed by polymerizing α-olefin on an olefin polymerization catalyst containing the above-mentioned solid titanium catalyst component [Ia] and organometallic compound catalyst component [IIa].

The second prepolymerized polyolefin-containing catalyst [Ib-IIa-IIIa] of the invention may be formed by polymerizing α-olefin on an olefin polymerization catalyst containing the above-mentioned solid titanium catalyst component [Ib], organometallic compound catalyst component [IIa] and the compound [IIIa] having at least two ether linkages.

The first to third olefin polymerization catalysts of the invention may be prepolymerized when used in olefin polymerization.

The prepolymerization of the olefin polymerization catalyst may be carried out by prepolymerizing α-olefin in an amount, based on 1 g of the catalyst, of 0.1-1000 g, preferably 0.3-500 g and especially 1-200 g on said catalyst.

In carrying out this prepolymerization, the catalyst may be used in a concentration higher than that of the catalyst used in the system of the main polymerization.

The solid titanium catalyst component [Ia] or [Ib] is used in the prepolymerization in an amount, per liter of a liquid medium, of usually 0.001-100 mmoles, preferably 0.01-50 mmoles, and especially 0.1-20 mmoles in terms of titanium atom.

The organometallic compound catalyst component [IIa] may be used in the prepolymerization in such an amount that the prepolymer is formed in an amount, based on 1 g of the solid titanium catalyst component [Ia] or [Ib], of 0.1-1000 g, preferably 0.3-500 g, said amount being usually about 0.1-300 moles, preferably about 0.5-100 moles and especially 1-50 moles based on 1 mole of titanium atom in the solid titanium catalyst component [Ia] or [Ib].

The electron donor [IIIa] may be used in the polymerization in an amount, based on 1 mole of titanium atom in the solid titanium catalyst component [Ia] or [Ib], of 0.1-50 moles, preferably 0.5-30 moles and especially 1-10 moles.

The prepolymerization may be carried out using a mixture of an inert hydrocarbon solvent, α-olefin and the above-mentioned catalyst components under mild conditions.

The inert hydrocarbon solvent used herein includes concretely aliphatic hydrocarbons such as propane, butane, pentane, hexane, heptane, octane, decane, dodecane and kerosine; alicyclic hydrocarbons such as cyclopentane, cyclohexane and methylcyclopentane; aromatic hydrocarbons such as benzene, toluene and xylene; and halogenated hydrocarbons such as ethylene chloride and chlorobenzene, or mixtures thereof. Of these inert hydrocarbon solvents exemplified above, particularly preferred are aliphatic hydrocarbons. When the prepolymerization is carried out using the inert hydrocarbon media as aforesaid, it is preferably carried out batchwise. On the one hand, the prepolymerization may also be carried out using α-olefin itself as a solvent or in a state where substantially no solvent is present. In that case, the prepolymerization is preferably carried out continuously.

The α-olefin used in the prepolymerization may be the same as or different from that used in the main polymerization as will be mentioned later, but in practice propylene is preferred.

The reaction temperature at which the prepolymerization is carried out is usually from about -20 to +100°C, preferably from about -20 to +80°C and especially from 0 to +40°C.

In carrying out the prepolymerization, a molecular weight modifier such as hydrogen may be used. It is desirable to use in this case the molecular weight modifier in such an amount that an intrinsic viscosity [η], as measured in decalin at 135°C, of the polymer resulting from the prepolymerization is more than about 0.2 dl/g, preferably about 0.5-10 dl/g.

The prepolymerization as illustrated above is desirably carried out in such a manner that the polymer resulting therefrom amounts to about 0.1-1000 g, preferably about 0.3-500 g and especially 1-200 g based on 1 g of the solid titanium catalyst component [Ia] or [Ib].

The method of olefin polymerization of the invention comprises polymerizing olefin using a catalyst containing the first or second prepolymerized polyolefin-containing catalyst of the invention.

The first olefin polymerization catalyst of the invention contains the above-mentioned prepolymerized polyolefin-containing catalyst [Ia-IIa], the organometallic compound [IIa] containing a metal selected from among those belonging to Groups I to III and the electron donor [III], which comprises at least one of an electron donor (c) which comprises at least one of a compound having at least two ether linkages with a plurality of intermediately existing bonding atoms, and a compound represented by RₙSi(OR')₄₋ₙ, wherein R and R' are each a hydrocarbon radical, and 0<n<4.

The second olefin polymerization catalyst of the invention contains the above-mentioned prepolymerized polyolefin-containing catalyst [Ib-IIa-III], the organometallic compound [IIa] containing a metal selected from among those belonging to Groups I to III of the periodic table and, if necessary, the electron donor [III], that is, at least one of a compound having at least two ether linkages with a plurality of intermediately existing bonding atoms and a compound represented by the formula RₙSi(OR')₄₋ₙ, wherein R and R' are each a hydrocarbon radical, and 0<n<4.

The organometallic compound catalyst component [IIa] used in the above-mentioned olefin polymerization catalysts is the same as that used in the preparation of the above-mentioned prepolymerized polyolefin-containing catalyst.

The compound having at least two ether linkages mentioned above, and the electron donors (a₁) and (b₁) used therein are also the same as those used in the preparation of the above-mentioned prepolymerized polyolefin-containing catalyst.

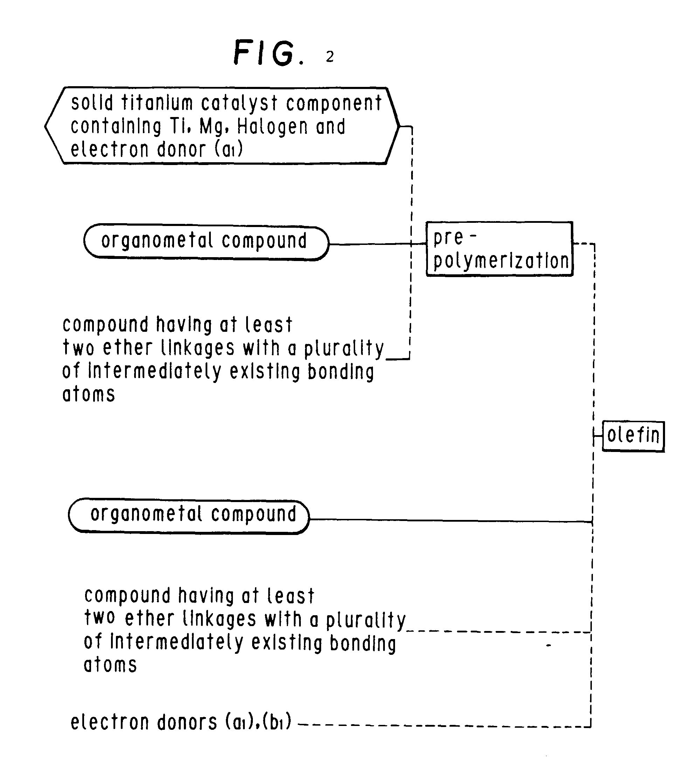

Figs. 1 and 2 are given to illustrate concrete examples of the steps for preparing the olefin polymerization catalysts of the invention.

The methods of olefin polymerization of the invention are illustrated below in detail.

Useful olefins in the methods of olefin polymerization include ethylene and α-olefins of 3-20 carbon atoms, for example, propylene, 1-butene, 1-pentene, 1-hexene, 4-methyl-1-pentene, 1-octene, 1-decene, 1-dodecene, 1-tetradecene, 1-hexadecene, 1-octadecene and 1-eicosane. In the olefin polymerization methods of the present invention, of these alpha-olefins are selected the α-olefin having at least 2 carbon atoms so as to make the α-olefin having at least 4 carbon atoms be the main compornent.

Further, in the present methods, as the starting materials for polymerization, there may also be used aromatic vinyl compounds such as styrene and allyl benzene; alicyclic vinyl compounds such as vinyl cyclohexane; cycloolefins such as cyclopentene, cycloheptene, norbornene, 5-methyl-2-norbornene, tetracyclodecene and 2-methyl-1,4,5,8-dimethano-1,2,3,4,4a,5,8,8a-octahydronaphthalene; and compounds having poly-unsaturation bonds such as conjugated diene or non-conjugated diene, for example, 6-methyl-1,6-octadiene, 7-methyl-1,6-octadiene, 6-ethyl-1,6-octadiene, 6-propyl-1,6-octadiene, 6-butyl-1,6-octadiene, 6-methyl-1,6-nonadiene, 7-methyl-1,6-nonadiene, 6-ethyl-1,6-nonadiene, 7-ethyl-1,6-nonadiene, 6-methyl-1,6-decadiene, 7-methyl-1,6-decadiene, 6-methyl-1,6-undecadiene, isoprene and butadiene.

In the present invention, the polymerization may be carried out by liquid phase polymerization technique such as solution polymerization or suspension polymerization, or by vapor phase polymerization technique.

When the polymerization is carried out by reaction of the slurry polymerization, the reaction solvent used may be either the above-mentioned inert hydrocarbon or an olefin which is liquid at the reaction temperature.

In the methods of olefin polymerization of the invention, the solid titanium catalyst component [I], [Ia] or [Ib] is used in an amount, based on 1 liter of the polymerization volume, of usually 0.001-0.5 mmole, preferably 0.005-0.1 mmole in terms of titanium atom. The organometallic compound catalyst component [IIa] or [IIb] is used in such an amount that the metallic atom thereof amounts usually to 1-2000 moles, preferably 5-500 moles per 1 mole of titanium atom or the prepolymerized polyolefin-containing catalyst present in the polymerization system.

In the method of olefin polymerization of the invention, the above-mentioned compound having at least two ether linkages when present is used in such an amount that said compound amounts usually to 0.001-10 moles, preferably 0.01-2 moles based on 1 mole of the metallic atom of the compound [IIa] or [IIb].

The electron donor, namely, the compound having at least two ether linkages and/or electron donoer (a₁), (b₁) may be used in the above-mentioned amount.

When hydrogen is used at the time of the main polymerization, the molecular weight of the polymer resulting therefrom can be modified, and polymers high in melt flow rate can be obtained.

In the present invention, the polymerization temperature of olefin is usually 20-200°C, preferably about 50-150°C, and the polymerization pressure is usually from ordinary pressure to 100 kg/cm², preferably 2-50 kg/cm². The polymerization may also be carried out batchwise, semi-continuously or continuously, or may be carried out in two or more stages under varied reaction conditions.

The olefin polymer thus obtained may be a homopolymer, random copolymer or block copolymer.

When the polymerization of olefin particularly propylene is carried out using such olefin polymerization catalysts as mentioned above, the resulting propylene polymer will come to have an isotactic index (I I) shown by a boiling heptane extraction residue of more than 70%, preferably more than 85% and especially more than 95%. In this case, steric regularity of the resulting polymer can be easily controlled by adjusting the amount of the above-mentioned compound having at least two ether linkages or electron donor to a desired level.

The polymer obtained in the olefin polymerization methods has an indication Mw/Mn of molecular weight distribution as measured by GPC (gel permeation chromatography) of usually not more than 5, said value being smaller than that of the polymer obtained by the prior art method.

The olefin polymerization catalyst of the invention may contain other useful components for olefin polymerization in addition to the components as mentioned above.

In the olefin polymerization method, since α-olefin having at least 2 carbon atoms is polymerized in the presence of the specific catalyst so as to obtain a polymer or copolymer containing at least 70 mol% of α-olefin having at least 4 carbon atom, there can be obtain a polymer or copolymer has an intrinsic viscosity [η] of 0.01-100 dl/g, prefferably 0.1-50 dl/g.

The alpha-olefin type polymer thus obtained may be blended, if neccesary, with a heat stabilizer, a weathering stabilizer, a chemical destaticzer,an anti-blocking agent, a lubricant, a nucleating agent, a pigment, a dye and an organic or inorganic filler.

### EFFECT OF THE INVENTION

According to the solid titanium catalyst components for olefin polymerization of the invention, it is possible, when used along with the above-mentioned compound having at least two ether linkages as an electron donor, to obtain olefin polymerization catalyst having high activities and capable of giving polymers high in stereospecificity, even when an electron donor is not used further at the time of polymerization of olefin.

According to the solid titanium catalyst components for olefin polymerization of the invention, moreover, it is possible to obtain olefin polymerization catalysts capable of giving polymers higher in steric regularity by using further the above-mentioned compound having at least two ether linkages or a specific electron donor at the time of polymerization of olefin.

According to the first method of olefin polymerization using the first olefin polymerization catalyst of the invention containing the prepolymerized polyolefin catalyst [Ia-IIa] containing the compound having at least two ether linkages as an electron donor and the organoaluminum compound catalyst component [IIa], it is possible to carry out the polymerization reaction efficiently with high catalytic activities, and obtain polymers high in stereospecificity.

By the first method of olefin polymerization using the first olefin polymerization catalyst of the invention containing the above-mentioned compound having at least two ether linkages and/or specific electron donors (a₁),(b₁) in addition to the above-mentioned two components, it is possible to obtain polymer higher in steric regularity.

According to the second prepolymerized polyolefin-containing catalyst of the invention containing the above-mentioned compound having at least two ether linkages as an electron donor, it is possible to obtain olefin polymerization catalyst high in activities and capable of giving polymers high in stereospecificity even when an electron donor is further used at the time of olefin polymerization.

According to the second method of olefin polymerization using the second olefin polymerization catalyst of the invention containing, in addition to two components, that is, the above-mentioned prepolymerized polyolefin-containing catalyst [Ib-IIa-IIIa] and the organometallic compound catalyst component [IIa], the above-mentioned compound having at least two ether linkage and/or electron donors (a₁), (b₁) [III], it is possible to carry out the polymerization reaction efficiently with high catalytic activities, and obtain polymers high in stereospecificity.

According to the third method of olefin polymerization, by virtue of the use of the olefin polymerization catalyst containing the above solid titanium catalyst component [Ia] and the above organometallic compound catalyst component [IIa], the polymerization reaction efficiently proceeds with high catalytic activity, giving polymers containing at least 70 mol% of α-olefin having at least 4 carbon atoms high in stereospecificity and crystallinity.

According to the fourth method of olefin polymerization, by virtue of the use of the olefin polymerization catalyst containing the above solid titanium catalyst component [Ib] and the above organometallic compound catalyst component [IIa] and the above compound having at least two ether linkages [IIIa], the polymerization reaction efficiently proceeds with high catalytic activity, giving polymers containing at least 70 mol% of α-olefin having at least 4 carbon atoms high in stereospecificity and crystallinity.

The present invention is illustrated below with reference to examples, but it should be construed that the invention is in no way limited to these examples.

### Example 1

### (Preparation of solid titanium catalyst component [A])

A mixture of 95.2 g of anhydrous magnesium chloride, 442 ml of decane and 390.6 g of 2-ethylhexyl alcohol was reacted with heating at 130°C for 2 hours to prepare a homogeneous solution. To this solution was added 21.3 g of phthalic anhydride, and the mixture was stirred at 130°C for one hour to thereby dissolve phthalic anhydride in the homogeneous solution. The homogeneous solution thus obtained was cooled to room temperature, and 75 ml of the homogeneous solution was added dropwise to 200 ml of titanium tetrachloride kept at -20°C over a period of one hour. After completion of the addition, the temperature of the mixed solution was elevated to 110°C and over a period of 4 hours. When the temperature of the mixture reached 110°C, 5.22 g of di-iso-butyl phthalate was added thereto, and the mixture was held with stirring at that temperature for 2 hours. After completion of the 2-hour reaction, the resulting solid was collected by hot filtration and re-suspended in 275 ml of titanium tetrachloride, followed by reaction with heating at 110°C for 2 hours. After completion of the reaction, the solid was collected by hot filtration and thoroughly washed with decane and hexane kept at 110°C until no free titanium compound was detected in the washing liquid. The solid titanium catalyst component [A] prepared in the manner mentioned above was stored as a decane slurry. A part thereof was dried to examine the catalyst composition. It was found that the thus-obtained solid titanium catalyst component [A] contained 2.4% by weight of titanium, 60% by weight of chlorine, 20% by weight of magnesium and 13.0% by weight of di-iso-butyl phthalate.

### (Pretreatment of solid titanium catalyst component [A])

Into a 400 ml four-necked glass reactor equipped with a stirrer, were introduced 100 ml of purified hexane, 10 mmol of triethylaluminum, 2 mmol of 2-isopropyl-2-isopentyl-1,3-dimethoxypropane (IPAMP) and one mmol, in terms of titanium atom, of the solid titanium catalyst component [A] obtained above in a nitrogen atmosphere, and the mixture was mixed with stirring at 20°C for one hour and then left to stand, followed by the removal of the supernatant. The solid was washed two times by a washing treatment consisting of adding purified hexane to re-suspend the solid and leaving to stand followed by removal of the supernatant. The solid obtained was re-suspended in purified hexane and the whole amount of the resulting slurry was transferred to a catalyst bottle. In this transfer operation, the whole volume of the slurry was measured and at the same time, the concentration of the catalyst in the slurry was measured.

### (Polymerization)

Into an autoclave having an internal volume of 2 liter was charged 750 ml of purified hexane. Into the autoclave were then introduced 0.75 mmol of triisobutylaluminum and 0.015 mmol, in terms of titanium atom, of the pretreated solid titanium catalyst component [A] in a propylene atmosphere at 40°C.

After the mixture was heated to 60°C, 200 ml of hydrogen was introduced, the temperature of the mixture was elevated to 70°C and the polymerization of propylene was then carried out for 2 hours. The pressure was kept at 7 kg/cm²G during the polymerization. After completion of the polymerization, a slurry containing the resulting solid was filtered to separate white powder and a liquid phase from each other. In reference to the white polymer powder dried, it was found that the yield was 328.2 g, boiling heptane extraction residue was 98.66%, MFR was 6.9 dg/min and the apparent bulk density was 0.43 g/ml. The liquid phase was concentrated to obtain 1.1 g of a solvent-soluble polymer. Accordingly, the activity was 22,000 g-pp/mmol-Ti and the total II (t.I.I.) was 98.4%.

Mw/Mn measured by GPC (gel permeation chromatography) was 4.44.

### Example 2

The pretreatment of the catalyst component [A] was repeated in the same manner as in Example 1 except that 10 mmol of IPAMP was used in the pretreatment of the solid titanium catalyst component [A], and thus obtained a pretreated catalyst component [A²]. Subsequently, the polymerization of propylene was repeated in the same manner as in Example 1 except that the catalyst component [A²] obtained by the above-described pretreatment of was used. There were obtained such results that the activity was 21,700 g-pp/mmol-Ti, t-II was 98.3%, MFR of white powder was 4.9 and the apparent bulk density was 0.46 g/ml.

### Example 3

### (Preparation of solid titanium catalyst component [B¹])

A mixture of 95.2 g of anhydrous magnesium chloride, 442 ml of decane and 390.6 g of 2-ethylhexyl alcohol were reacted with heating at 130°C for 2 hours to prepare a homogeneous solution. To the homogeneous solution was added 21.3 g of phthalic anhydride, and the mixture was stirred at 130°C for one hour to dissolve phthalic anhydride in the homogeneous solution. The thus-obtained homogeneous solution was cooled to room temperature, and 75 ml of the homogeneous solution was added dropwise to 200 ml of titanium tetrachloride kept at -20°C over a period of one hour. After completion of the addition, the temperature of the mixed solution was elevated to 110°C over a period of 4 hours. When the temperature reached 110°C, 4.79 ml of 2-isopropyl-2-isopentyl-1,3-dimethoxypropane (IPAMP) was added thereto, and the mixture was held with stirring at that temperature for 2 hours. After completion of the 2-hour reaction, the resulting solid was collected by hot filtration and re-suspended in 275 ml of titanium tetrachloride. The mixture was again reacted with heating at 110°C for 2 hours. After completion of the reaction, the solid was collected by hot filtration and thoroughly washed with decane and hexane kept at 110°C until no free titanium compound was detected in the washing liquid. The solid titanium catalyst component [B¹] prepared above was stored as a decane slurry. A part thereof was dried to examine the catalyst composition. It was found that the thus-obtained solid titanium catalyst component [B¹] contained 2.3% by weight of titanium, 63% by weight of chlorine, 22% by weight of magnesium and 9.8% by weight of IPAMP.

### Example 4

### (Preparation of solid titanium catalyst component [B²])

A high-speed mixer having an internal volume of 2 liter (manufactured by Tokushu Kika Kogyo KK) was thoroughly purged with N₂, and 700 ml of refined kerosine, 10 g of commercial available MgCl₂, 24.2 g of ethanol and 3 g of Emasol 320 (sorbitan distearate, a product of Kao-Atlas KK) were placed therein. While stirring the mixture, the temperature thereof was elevated and the mixture was stirred at 120°C and 800 rpm for 30 minutes. Under the high-speed stirring, the resulting solution was transferred to a 2-liter glass flask (equipped with a stirrer) which was previously charged with 1 liter of refined kerosine cooled to -10°C by using a Teflon tube having an inner diameter of 5 mm under high-speed stirring. The resulting solid was collected by filtration and thoroughly washed with hexane to obtain a carrier.

In 150 ml of titanium tetrachloride was placed 7.5 g of said carrier at room temperature. After the temperature of the mixture was elevated to 40°C, 1.33 ml of 2-isopropyl-2-isopentyl-1,3-dimethoxypropane was added thereto, and the temperature of the mixture was then elevated to 100°C. After the mixture was stirred at 100°C for 2 hours, the resulting solid was collected by filtration and re-suspended in 150 ml of titanium tetrachloride, and the suspension was stirred at 130°C for 2 hours. The reaction solid was collected from the reaction mixture by filtration and thoroughly washed with a sufficient amount of purified hexane to obtain a solid catalyst component [B²]. The component in terms of atom contained 3.1% by weight of titanium, 58% by weight of chlorine, 17% by weight of magnesium and 19.7% by weight of 2-isopropyl-2-isopentyl-1,3-dimethoxypropane.

### Example 5

### (Preparation of solid titanium catalyst component [B³])

A solid titanium catalyst component [B³] was prepared in the same manner as in Example 3 except that diisobutyl phthalate (DIBP) was used in place of IPAMP used in the preparation of the solid titanium catalyst component of Example 3. The resulting catalyst component contained, on a weight basis, 2.4% of titanium, 20% of magnesium, 60% of chlorine and 13.0% of DIBP.

### Example 6

### (Preparation of solid titanium catalyst component [B⁴])

A solid titanium catalyst component [B⁴] was prepared in the same manner as in Example 4 except that an equimolar amount of diisobutyl phthalate (DIBP) was used in place of IPAMP used in the preparation of the solid titanium catalyst component of Example 4. The resulting catalyst component contained, on a weight basis, 2.3% of titanium, 17% of magnesium, 63% of chlorine and 5.5% of DIBP.

### Example 7

The solid titanium catalyst component [A] was used and prepolymerized by the following procedure to obtain a prepolymerized polyolefin-containing catalyst (C¹).

### (Prepolymerization of solid titanium catalyst component [A])

To a 400 ml four-necked glass reactor equipped with a stirrer were added 100 ml of purified hexane, 10 mmol of triethylaluminum, 2 mmol of 2-isopropyl-2-isopentyl-1,3-dimethoxypropane (IPAMP) and 1.0 mmol, in terms of Ti atom, of the above solid Ti catalyst component [A]. Propylene at a rate of 3.2 Nl/hr was fed to the reactor at 20°C for one hour. When the feed of propylene was completed, the reactor was purged with nitrogen gas, followed by removal of the supernatant. The solid was washed two times by a washing treatment consisting of adding purified hexane to re-suspend the solid and leaving to stand followed by removal of supernatant. The solid was re-suspended in purified hexane and the whole amount of the suspension was transferred to a catalyst bottle. Thus, the prepolymerized olefin-containing catalyst [C¹] was obtained.

### (Polymerization)

Into an autoclave having an internal volume of 2 liter was charged 750 ml of purified hexane. Into the autoclave were then charged 0.75 mmol of triethylaluminum and 0.015 mmol, in terms of titanium atom, of the prepolymerized olefin-containing catalyst [C¹] obtained above in a propylene atmosphere at 60°C.

Into the autoclave was introduced 200 ml of hydrogen, the temperature of the mixture was elevated to 70°C and the polymerization of propylene was then carried out for 2 hours. The pressure was kept at 7 kg/cm²G during the polymerization. After completion of the polymerization, a slurry containing the resulting solid was filtered to separate white powder and a liquid phase from each other. After drying the resulting white polymer powder, it was found by using the dryed powder that the yield was 400.6 g, boiling heptane extraction residue was 98.94%, MFR was 3.4 dg/min and the apparent bulk density was 0.45 g/ml. The liquid phase was concentrated to obtain 1.5 g of a solvent soluble polymer. Accordingly, activity was 26,800 g-pp/mmol-Ti, and the total II (t.I.I.) was 98.6%.

### Example 8

A prepolymerized olefin-containing catalyst [C²] was obtained in the same manner as in Example 7 except that 1 mmol of IPAMP was used in the prepolymerization of Example 7.

Subsequently, the polymerization of propylene was carried out in the same manner as in Example 9 except that the prepolymerized olefin-containing catalyst [C²] was used in place of the prepolymerized olefin-containing catalyst [C¹].

The results are shown in Table 1.

Mw/Mn measured by GPC was 4.79.

### Example 9

A prepolymerized olefin-containing catalyst [C³] was obtained in the same manner as in Example 7 except that 0.5 mmol of IPAMP was used in the prepolymerization of Example 9.

Subsequently, the polymerization of propylene was carried out in the same manner as in Example 9 except that the prepolymerized olefin-containing catalyst [C³] and further 0.075 mmol of IPAMP were used.

The results are shown in Table 1.

### Examples 10 and 11

The polymerization of propylene was carried out in the same manner as in Example 9 except that the prepolymerized olefin-containing catalyst [C¹] or [C²] was used.

The results are shown in Table 1.

### Example 12

### (Preparation of solid titanium catalyst component [C⁴])

A high-speed mixer having an internal volume of 2 liter (manufactured by Tokushu Kika Kogyo KK) was thoroughly purged with N₂, and 700 ml of refined kerosine, 10 g of commercially available MgCl₂, 24.2 g of ethanol and 3 g of Emasol 320 (sorbitan distearate, a product of Kao-Atlas KK) were placed therein. While stirring the mixture, the temperature of the mixture was elevated and the mixture was stirred at 120°C and 800 rpm for 30 minutes. Under high-speed stirring, the resulting solution was transferred to a 2-liter glass flask (equipped with a stirrer) which was previously charged with 1 liter of refined kerosine cooled to -10°C by using a Teflon tube having an inner diameter of 5 mm. The resulting solid was collected by filtration and thoroughly washed with hexane to obtain a carrier.

In 150 ml of titanium tetrachloride was suspended 7.5 g of said carrier at room temperature. After the temperature of the suspension was elevated to 40°C, 1.3 ml of diisobutyl phthalate (DIBP) was added thereto and the temperature of the mixture was elevated to 100°C. After the mixture was stirred at 100°C for 2 hours, the resulting solid was collected by filtration and re-suspended in 150 ml of titanium tetrachloride, and the suspension was stirred at 130°C for 2 hours. The reaction solid was collected from the reaction mixture by filtration and thoroughly washed with a sufficient amount of purified hexane to obtain a solid titanium catalyst component [C⁴]. The component in terms of atom contained 2.3% by weight of titanium, 63% by weight of chlorine, 20% by weight of magnesium and 5.5% by weight of DIBP.

### (Prepolymerization of solid titanium catalyst component [C⁴])

To a 400 ml four-necked glass reactor equipped with a stirrer were added 100 ml of purified hexane, 10 mmol of triethylaluminum, 2 mmol of 2-isopropyl-2-isopentyl-1,3-dimethoxypropane and 1.0 mmol, in terms of Ti atom, of the above solid titanium catalyst component [C⁴] in a nitrogen atmosphere. Propylene at a rate of 3.3 Nl/hr at 20°C was fed to the reactor for one hour. When the feed of propylene was completed, the reactor was purged with nitrogen gas, followed by removal of the supernatant. The solid was washed two times by a washing treatment consisting of adding purified hexane to re-suspend the solid and leaving to stand followed by removal of supernatant. The solid was re-suspended in purified hexane. The whole amount of the suspension was transferred to a catalyst bottle. In this way, the prepolymerized olefin-containing catalyst [C⁴] was obtained.

### (Polymerization)

The polymerization of propylene was carried out in the same manner as in Example 9 except that the prepolymerized olefin-containing catalyst [C⁴] obtained above was used.

The results are shown in Table 1.

Mw/Mn measured by GPC was 4.48.

### Example 13

The polymerization of propylene was carried out in the same manner as in Example 11 except that the prepolymerized olefin-containing catalyst [C⁴] was used.

The results are shown in Table 1.

Mw/Mn measured by GPC was 4.72.

**Table 1**

| Example No. | Electron donor | Activity g-pp/mmolTi | t-II % | MFR dg/min | Apparent bulk density g/ml |
|---|---|---|---|---|---|
| 7 | - | 26,800 | 98.6 | 3.4 | 0.45 |
| 8 | - | 30,900 | 98.6 | 3.5 | 0.45 |
| 9 | IPAMP | 23,400 | 98.9 | 5.0 | 0.45 |
| 10 | IPAMP | 30,500 | 99.0 | 3.5 | 0.45 |
| 11 | IPAMP | 31,600 | 98.9 | 2.7 | 0.46 |
| 12 | - | 27.800 | 98.6 | 2.9 | 0.48 |
| 13 | IPAMP | 25,000 | 98.8 | 3.4 | 0.47 |

### Example 14

Buten-1 was polymerized by the following procedure wherein the prepolymerized polyolefin-containing catalyst (C¹) was used.

### (Polymerization)

Into an autoclave having an internal volume of 2 l was charged 500 ml of n-hexane in a nitrogen atmosphere. After the system in the autoclave was made at a temperature of - 50°C, into the autoclave were then introduced 500 ml of liquid butene-1, 2.0 mmol of triethylaluminium, 0.2 mmol of 2-isopropyl-2-isopentyl-1,3-dimethoxypropane (IPAMP) and 100 ml of hydrogen. After the temperature of the mixture was elevated to 60°C, 0.01 mmol, in terms of titanium atom, of the prepolymerized polyolefin-containing catalyst (C¹) was added into the mixture to initiate the polymerization of butene-1. After the polymerization of butene-1 was carried out for 1 hours, methanol was added into the reaction mixture to stop the polymerization and then the unreacted butene-1 was removed. Reaction mixture was introduced into large amount of methanol to obtain white solid. The resulting white solid was ground by a mixer, washed with methanol and dried under a reduced pressure to obtain butene-1 polymer.

The polymerization activity, the isotactic index (the ratio of the insoluble component in n-decane at 3°C, hereinafter referred as II), MFR, the intrinsic viscosity [η] in decaline at 135°C of the butene-1 polymer obtained are shown in Table 3

### Example 17

Butene-1 was polymerized by the following procedure wherein the prepolymerized polyolefin-containing catalyst (C¹) was used.

### (Polymerization)

After an autoclave having an internal volume of 2 l was cooled to -50°C, into the autoclave was charged 500 ml of liquid buten-1, 1.0 mmol of triethylalminium, 0.1 mmol of 2-isopropyl-2-isopentyl-1,3-dimethoxypropane, 0.01 mmol, in termes of titanium atom, of the prepolymerized polyolefin-containing catalyst (C¹) and 400 ml of hydrogen, and then the system was elevated to 30°C. After the polymerization of butene-1 was carried out for 2 hours at 30°C, methanol was added into the reaction mixture to stop the polymerization and then the unreacted butene-1 was removed. The resulting white solid was washed with methanol to obtain butene-1 polymer.

The polymerization activity, II, MFR, the intrinsic viscosity [η] of the butene-1 polymer obtained are shown in Table 2

### Comparative Example 1

The preparation of the solid titanium catalyst component was repeated in the same manner as in Example 1 except that 1.0 mmol of diphenylmethoxysilane (DPMS) was used in the pretreatment of the solid titanium catalyst component [D]. Subsequently, the prepolymerization was repeated in the same manner as in Example 9 except that the solid titanium catalyst component [D] was used to obtain a prepolymerized polyolefin-containing catalyst (D).

The polymerization of buten-1 was repeated as same manner in Example 14 except that the prepolymerized polyolefin-containing catalyst (D) was used in place of the prepclymerized catalyst (C¹), tri-isobutylaluminium was used in place of triethylalminium and DPMS was used in place of IPAMP.

Results are shown in Table 2.

**Table 2**

| | Activity g/mmol Ti | II % | MFR dg/min. | [η] dl/g |
|---|---|---|---|---|
| Example 14 | 17,700 | 100 | 0.07 | 3.74 |
| Example 15 | 11,200 | 98.9 | 0.08 | 3.80 |
| Comp.Ex. 1 | 7,700 | 99.6 | 3.67 | |

### Example 16

The following prepolymerization was carried out by using the solid titanium catalyst component [B²] prepared in Example 4.

### (Prepolymerization of the solid titanium catalyst component [B²])

To a 400 ml four-necked glass reactor equipped with a stirrer were added 100 ml of purified hexane, 10 mmol of triethylaluminum, 1 mmol of 2-isopropyl-2-isopentyl-1,3-dimethoxypropane and 1.0 mmol, in terms of Ti atom, of the above solid titanium catalyst component [B²] in a nitrogen atmosphere. Propylene at a rate of 2.5 Nl/hr was fed to the reactor at 20°C for one hour. When the feed of propylene was completed, the reactor was purged with nitrogen gas, followed by removal of the supernatant. The solid was washed two times by a washing treatment consisting of adding purified hexane to resuspend the solid and leave to stand followed by removal of supernatant. The solid was re-suspended in purified hexane and the whole amount of the suspension was transferred to a catalyst bottle to obtain the prepolymerized polyolefin-containing catalyst (C⁵) .

### (Polymerization)

Into a glass reacter having an internal volume of 1 litter was charged 500 ml of 4-methyl-1-pentene in a nitrogen atmosphere and then the temperature in the reacter was elevated to 50°C. Into the reacter, was introduced 0.5 mmol of triethylaluminium and 0.05 mmol of cyclohexylmethyldimethoxysilane (CMMS), and further, 0.01 mmol, in termes of titanium atom, of the prepolymerized polyolefin-containing catalyst (C⁵) was added in to the mixture to initiate the polymerization of 4-methyl-1-pentene. After the polymerization of 4-methyl-1-pentene was carried out for 1 hours, methanol was added into the reaction mixture to stop the polymerization. The resulting white solid was filtrated off, washed with methanol and dried in a reduced pressure to obtain 2.9 g of 4-methyl-1-pentene polymer. The polymerization activity was 290 g/mmol Ti.

### Example 17

The polymerization of 4-methyl-1-pentene was repeated in the same manner as in Example 16 except that IPAMP was used in place of CMMS to obtain 9.86 g of 4-methyl-1-pentene polymer. The polymerization activity was 990 g/mmol Ti.

### Example 18

### (Prepolymerization of solid titanium catalyst component [G])

To a 400 ml four-necked glass reactor equipped with a stirrer were added 100 ml of purified hexane, 3 mmol of triethylaluminum and 1.0 mmol, in terms of Ti atom, of the above solid Ti catalyst component [G]. Propylene at a rate of 3.2 Nl/hr was fed to the reactor at 20°C for one hour. When the feed of propylene was completed, the reactor was purged with nitrogen gas, followed by removal of the supernatant. The solid was washed two times by a washing treatment consisting of adding purified hexane to re-suspend the solid and leaving to stand followed by removal of supernatant. The solid was re-suspended in purified hexane and the whole amount of the suspension was transferred to a catalyst bottle. Thus, the prepolymerized olefin-containing catalyst [G²] was obtained.

### (Polymerization)

Into an autoclave having an internal volume of 2 liter was charged 750 ml of purified hexane. Into the autoclave were then charged 0.75 mmol, in terms of alminium atom, of a mixture of triisobutylaluminium and ethylaluminium sesquichloride at a ratio (mol/mol) of 2/1, 0.075 mmol of IPAMP and 0.0075 mmol of the prepolymerized olefin-containing catalyst (G²) obtained above in a propylene atmosphere at 60°C.

Into the autoclave was introduced 150 ml of hydrogen, the temperature of the mixture was elevated to 70°C and the polymerization of propylene was then carried out for 2 hours. The pressure was kept at 7 kg/cm²G during the polymerization.

The results are as follows:

| | |
|---|---|
| Electron Donor | IPAMP |
| Activity | 51,100 g/mmol Ti |
| II | 98.6% |
| MFR | 1.7 g/min |
| Apparent bulk density | 0.44 g/ml |

### Example 19

The prepolymerization are carried out in the following proceture by using the solid titanium catalyst component [G]. (Prepolymerization of solid titanium catalyst component [G])

A prepolymerized olefin-containing catalyst (G³) was obtained in the same manner as in Example 14 except that 3.0 mmol of triethylaluminium, 1.0 mmol, in terms of titanium atom, of the solid titanium catalyst component [G³] was used and IPAMP was not used in the prepolymerization of Example 14.

### (Polymerization)

The polymerization of propylene was carried out in the same manner as in Example 14 except that the prepolymerized olefin-containing catalyst [C³] was used in place of the prepolymerized olefin-containing catalyst [C¹] and further 200 ml of hydrogen was used.

The results are as follows:

| | |
|---|---|
| Activity | 51,500 g/mmol Ti |
| II | 98.6% |
| MFR (load at 10 kg) | 4.5 dg/min |
| η | 3.29 dl/g. |

## Claims

1. An olefin polymerization catalyst comprising:
[Ia-IIa] a pre-polymerized polyolefin-containing catalyst comprising [Ia] a solid titanium catalyst component containing titanium, magnesium, halogen and a compound having at least two ether linkages with a plurality of intermediately existing bonding atoms, and
[IIa] an organometallic compound catalyst component containing a metal belonging to Groups I-III of the periodic table, and a preliminarily polymerized polyolefin obtainable from an α-olefin of 2-20 carbon atoms,
[IIa] an organometallic compound catalyst component containing a metal selected from Groups I-III of the periodic table, and
[III] an electron donor (c) which comprises at least one of a compound having at least two ether linkages with a plurality of intermediately existing bonding atoms, and a compound represented by RₙSi(OR')₄₋ₙ,wherein R and R' are each a hydrocarbon radical, and 0<n<4.

2. A catalyst according to claim 1, wherein the compound having at least two ether linkages is a compound having at least two ether linkages with a plurality of intermediately existing bonding carbon atoms.

3. A catalyst according to claim 1 or claim 2, wherein the compound having at least two ether linkages is represented by the following formula: 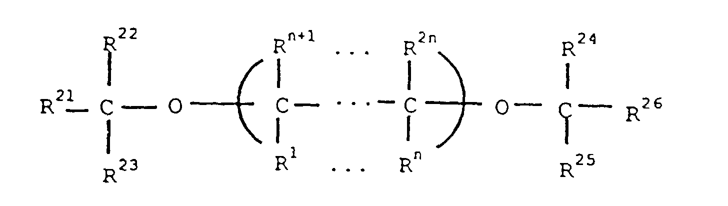 wherein n is an integer of 2≤n≤10, R¹ to R²⁶ are each a substituent having at least one element selected from carbon, hydrogen, oxygen, halogen, nitrogen, sulfur, phosphorus, boron and silicon, any two members of R¹ to R²⁶ may form together a ring other than a benzene ring, and the main chain may contain atoms other than carbon.

4. An olefin polymerization catalyst comprising:
[Ib-IIa-IIIa] a pre-polymerized polyolefin-containing catalyst comprising [Ib] a solid titanium catalyst component containing titanium, magnesium, halogen and a polycarboxylic acid ester compound, [IIa] an organometallic compound catalyst component containing a metal selected from Groups I-III of the periodic table, and [IIIa] a compound having at least two ether linkages with a plurality of intermediately existing bonding atoms, and a preliminary polymerized polyolefin obtainable from an α-olefin of 2-20 carbon atoms,
[IIa] an organometallic compound catalyst component containing a metal selected from Groups I-III of the periodic table, and optionally
[III] an electron donor (c) which comprises at least one of a compound having at least two ether linkages with a plurality of intermediately existing bonding atoms and a compound represented by the formula RₙSi(OR')₄₋ₙ,wherein R and R' are each a hydrocarbon radical, and 0<n<4.

5. A catalyst according to claim 4, wherein the compound having at least two ether linkages is a compound having at least two ether linkages with a plurality of intermediately existing bonding carbon atoms.

6. A catalyst according to claim 4 or claim 5, wherein the compound having at least two ether linkages is represented by the following formula: 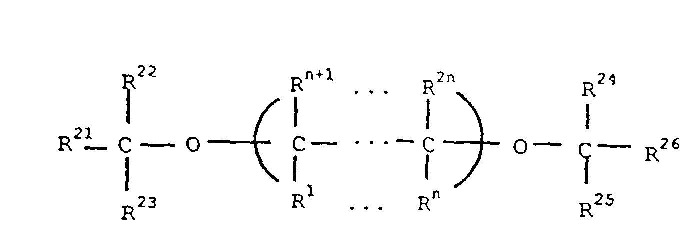 wherein n is an integer of 2≤n≤10, R¹ to R²⁶ are each a substituent having at least one element selected from carbon, hydrogen, oxygen, halogen, nitrogen, sulfur, phosphorus, boron and silicon, a pair of groups selected from R¹ to R²⁶ may form together a ring other than a benzene ring, and the main chain may contain atoms other than carbon.

7. A method of olefin polymerization, wherein ethylene and/or an α-olefin is polymerized in the presence of a catalyst as claimed in any one of claims 1 to 6.

## Patentansprüche

1. Olefinpolymerisationskatalysator, umfassend
[Ia-IIa] einen prepolymerisiertes Polyolefin enthaltenden Katalysator, umfassend [Ia] eine feste Titankatalysatorkomponente, enthaltend Titan, Magnesium, Halogen und eine Verbindung mit mindestens zwei Etherbindungen mit einer Mehrzahl von dazwischen liegenden Bindungsatomen, und [IIa] eine metallorganische Katalysatorkomponente, enthaltend ein Metall der Gruppen I-III des Periodensystems und ein vorher polymerisiertes Polyolefin, erhältlich aus einem α-Olefin mit 2-20 Kohlenstoffatomen,
[IIa] eine metallorganische Katalysatorkomponente, enthaltend ein Metall, ausgewählt aus den Gruppen I-III des Periodensystems, und
[III] einen Elektronendonor (c), umfassend mindestens eine Verbindung mit mindestens zwei Etherbindungen mit einer Mehrzahl von dazwischen liegenden Bindungsatomen und/oder eine Verbindung, angegeben durch RₙSi(OR')₄₋ₙ, wobei R und R' jeweils einen Kohlenwasserstoffrest bedeuten und 0<n<4 ist.

2. Katalysator nach Anspruch 1, wobei die Verbindung mit mindestens zwei Etherbindungen eine Verbindung ist, die mindestens zwei Etherbindungen mit einer Mehrzahl von dazwischen liegenden bindenden Kohlenstoffatomen aufweist.

3. Katalysator nach Anspruch 1 oder 2, wobei die Verbindung mit mindestens zwei Etherverbindungen angegeben wird durch die folgende Formel: 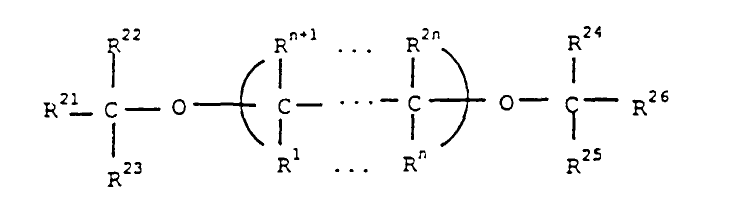 wobei n eine ganze Zahl von 2≤n≤10 ist, R¹ bis R²⁶ jeweils einen Substituenten bedeuten mit mindestens einem Element, ausgewählt aus Kohlenstoff, Wasserstoff, Sauerstoff, Halogen, Stickstoff, Schwefel, Phosphor, Bor und Silicium, wobei beliebige zwei Reste R¹ bis R²⁶ zusammen einen anderen Ring als einen Benzolring bilden können und die Hauptkette andere Atome als Kohlenstoff enthalten kann.

4. Olefinpolymerisationskatalysator, umfassend
[Ib-IIa-IIIa] einen prepolymerisiertes Polyolefin enthaltenden Katalysator, umfassend [Ib] eine feste Titankatalysatorkomponente, enthaltend Titan, Magnesium, Halogen und eine Polycarbonsäure-ester-Verbindung, [IIa] eine metallorganische Katalysatorkomponente, enthaltend ein Metall, ausgewählt aus den Gruppen I-III des Periodensystems und [IIIa] eine Verbindung mit mindestens zwei Etherbindungen mit einer Mehrzahl von dazwischen liegenden Bindungsatomen und ein vorher polymerisiertes Polyolefin, erhältlich aus einem α-Olefin mit 2-20 Kohlenstoffatomen,
[IIa] eine metallorganische Katalysatorkomponente, enthaltend ein Metall, ausgewählt aus den Gruppen I-III des Periodensystems, und ggf.
[III] einen Elektronendonor (c), umfassend mindestens eine Verbindung mit mindestens zwei Etherbindungen mit einer Mehrzahl von dazwischen liegenden Bindungsatomen und eine Verbindung, angegeben durch RₙSi(OR')₄₋ₙ, wobei R und R' jeweils einen Kohlenwasserstoffrest bedeuten und 0<n<4 ist.

5. Katalysator nach Anspruch 4, wobei die Verbindung mit mindestens zwei Etherbindungen eine Verbindung ist, die mindestens zwei Etherbindungen mit einer Mehrzahl von dazwischen liegenden bindenden Kohlenstoffatomen aufweist.

6. Katalysator nach Anspruch 4 oder 5, wobei die Verbindung mit mindestens zwei Etherverbindungen angegeben wird durch die folgende Formel: 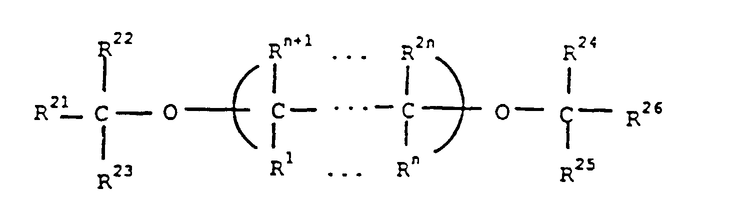 wobei n eine ganze Zahl von 2≤n≤10 ist, R¹ bis R²⁶ jeweils einen Substituenten bedeuten mit mindestens einem Element, ausgewählt aus Kohlenstoff, Wasserstoff, Sauerstoff, Halogen, Stickstoff, Schwefel, Phosphor, Bor und Silicium, wobei ein Paar von Gruppen, ausgewählt aus R¹ bis R²⁶ zusammen einen anderen Ring als einen Benzolring bilden kann und die Hauptkette andere Atome als Kohlenstoff enthalten kann.

7. Verfahren zur Olefinpolymerisation, wobei Ethylen und/oder ein α-Olefin in Gegenwart eines Katalysators nach einem der Ansprüche 1 bis 6 polymerisiert wird.

## Revendications

1. Catalyseur de polymérisation d'oléfines comprenant :
[Ia-IIa] un catalyseur contenant une polyoléfine prépolymérisée comprenant
[Ia] un composant catalyseur solide à base de titane contenant du titane, du magnésium, des atomes d'halogène et un composé comportant au moins deux liaisons éther et plusieurs atomes de liaison entre ces liaisons éther, et
[IIa] un composant catalyseur à base d'un composé organométallique contenant un métal appartenant aux groupes I-III de la table périodique des éléments, et une polyoléfine prépolymérisée que l'on peut obtenir à partir d'une α-oléfine comportant de 2 à 20 atomes de carbone,
[IIa] un composant catalyseur à base d'un composé organométallique contenant un métal choisi dans les groupes I-III de la table périodique des éléments, et
[III] un donneur d'électrons (c) comprenant un composé ayant au moins deux liaisons éther et plusieurs atomes de liaison entre ces liaisons éther et/ou un composé représenté par la formule RₙSi(OR')₄₋ₙ, où R et R' représentent chacun un radical hydrocarboné, et 0 < n < 4.

2. Catalyseur conforme à la revendication 1 dans lequel le composé comportant au moins deux liaisons éther est un composé comportant au moins deux liaisons éther et plusieurs d'atomes de carbone entre ces liaisons éther.

3. Catalyseur conforme à la revendication 1 ou 2 dans lequel le composé comportant au moins deux liaisons éther est représenté par la formule suivante : 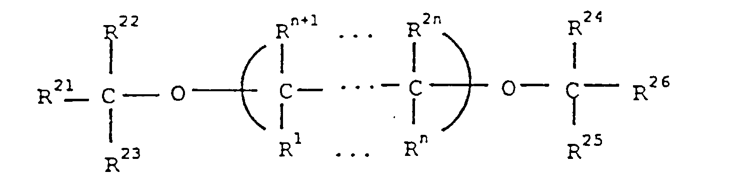 dans laquelle n représentent un nombre entier compris entre 2 et 10, R¹ à R²⁶ représente chacun un substituant comportant au moins un élément choisi parmi les atomes de carbone, d'hydrogène, d'oxygène, d'halogène, d'azote, de soufre, de phosphore, de bore et de silicium et deux éléments de R¹ à R²⁶ peuvent former conjointement un cycle autre qu'un cycle benzène, et la chaîne principale peut contenir des atomes autre que des atomes de carbone.

4. Catalyseur de polymérisation d'oléfines comprenant :
[Ib-IIa-IIIa] un catalyseur contenant une polyoléfine prépolymérisée comprenant
[Ib] un composant catalyseur solide à base de titane contenant du titane, du magnésium, des atomes d'halogène et un composé de type ester d'acide polycarboxylique,
[IIa] un composant catalyseur à base d'un composé organométallique contenant un métal appartenant aux groupes I-III de la table périodique des éléments, et
[IIIa] un composé comportant au moins deux liaisons éther et plusieurs atomes de liaison entre ces liaisons éther, et une polyoléfine prépolymérisée que l'on peut obtenir à partir d'une α-oléfine comportant de 2 à 20 atomes de carbone,
[IIa] un composant catalyseur à base d'un composé organométallique contenant un métal choisi dans les groupes I-III de la table périodique des éléments, et facultativement,
[III] un donneur d'électrons (c) comprenant un composé comportant au moins deux liaisons éther et plusieurs atomes de liaison entre ces liaisons éther et/ou un composé représenté par la formule RₙSi(OR')₄₋ₙ, où R et R' représentent chacun un radical hydrocarboné, et 0 < n < 4.

5. Catalyseur conforme à la revendication 4 dans lequel le composé comportant au moins deux liaisons éther est un composé formant au moins deux liaisons éther avec, entre ces liaisons, plusieurs atomes de carbone.

6. Catalyseur conforme à la revendication 4 ou 5 dans lequel le composé comportant au moins deux liaisons éther est représenté par la formule suivante : 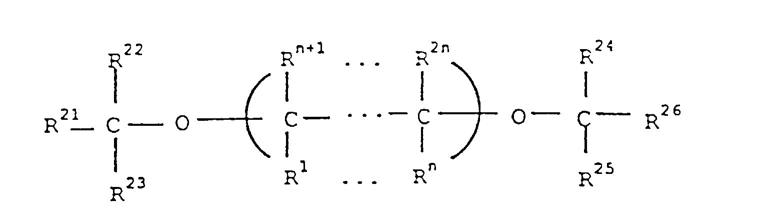 dans laquelle n représente un nombre entier compris entre 2 et 10, R¹ à R²⁶ représentent chacun un substituant comportant au moins un élément choisi parmi les atomes de carbone, d'hydrogène, d'oxygène, d'halogène, d'azote, de soufre, de phosphore, de bore et de silicium et deux éléments de R¹ à R²⁶ peuvent former, conjointement, un cycle autre qu'un cycle benzène, et la chaîne principale peut contenir des atomes autre que des atomes de carbone.

7. Procédé de polymérisation d'oléfines, dans lequel on polymérise de l'éthylène et/ou une α-oléfine en présence d'un catalyseur conforme à l'une quelconque des revendications 1 à 6.
